(19) Europäisches Patentamt
European Patent Office
Office européen des brevets

(11) EP 4 289 914 A1

# (12) EUROPEAN PATENT APPLICATION

published in accordance with Art. 153(4) EPC

(43) Date of publication:
**13.12.2023 Bulletin 2023/50**

(21) Application number: **22749506.6**

(22) Date of filing: **21.01.2022**

(51) International Patent Classification (IPC):
***C09K 3/00*** *(2006.01)* ***C09K 3/18*** *(2006.01)*

(52) Cooperative Patent Classification (CPC):
**B32B 27/00; C08G 77/54; C09D 5/00; C09D 7/20; C09D 183/00; C09K 3/00; C09K 3/18**

(86) International application number:
**PCT/JP2022/002095**

(87) International publication number:
**WO 2022/168631 (11.08.2022 Gazette 2022/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.02.2021 JP 2021017844**

(71) Applicant: **SUMITOMO CHEMICAL COMPANY, LIMITED**
**Tokyo 103-6020 (JP)**

(72) Inventors:
- **DAIMON UEHARA, Michiru**
  **Osaka-shi, Osaka 554-8558 (JP)**
- **ITO, Tomohiro**
  **Osaka-shi, Osaka 554-8558 (JP)**
- **MATSUURA, Takuya**
  **Osaka-shi, Osaka 554-8558 (JP)**

(74) Representative: **Vossius & Partner**
**Patentanwälte Rechtsanwälte mbB**
**Siebertstraße 3**
**81675 München (DE)**

## (54) MIXED COMPOSITION

(57) The present invention provides a mixed composition of an organosilicon compound (C) having an amino group or an amine skeleton, a solvent 1, and a solvent 2, in which, when the ratio of the hydrogen bond term (δH) to the dispersion term (δD) in the Hansen solubility parameters is defined as δH/δD, the ratio (δH/δD) for the solvent 1 is less than 0.410 and the ratio (δH/δD) for the solvent 2 is 0.410 or more.

EP 4 289 914 A1

## Description

[Technical Field]

The present invention relates to a mixed composition and a laminated body including an intermediate layer formed from the composition.

[Background Art]

In a variety of fields, such as touch panel displays and other display devices, optical elements, semiconductor elements, construction materials, and window glass for automobiles and buildings, there is a demand for imparting water repellency to the surface of substrates. Thus, various water repellent films are used as water repellent coatings, water repellent and oil repellent coatings, and the like.

Water repellent films are usually formed on substrates for use, and when applying a composition for water repellent film formation to a substrate, another layer such as a primer layer may be formed on the substrate in advance and then the composition may be applied to form a water repellent coating or a water repellent and oil repellent coating.

For example, Patent Literature 1 discloses that oxidation treatment is performed on the surface of a cured coating film (I) having a glass transition temperature of 80°C or higher, then a composition (A) containing at least one selected from an isocyanate group-containing unsaturated compound and an isocyanate group-containing silane compound is applied to the treated surface and dried to form a primer layer (II), and then a functional layer (III) having a reactive group that can react with the primer layer is formed, thereby being able to form a functional layer such as a water repellent layer on the cured coating film surface.

[Citation List]

[Patent Literature]

[Patent Literature 1] Japanese Patent Laid-Open No. 2014-193988

[Summary of Invention]

[Technical Problem]

Here, the composition for the primer layer may be deteriorated in appearance or characteristics during storage. Therefore, an object of the present invention is to provide a composition with excellent storage stability.

[Solution to Problem]

The present invention, which solves the above problem, is as follows.

[1] A mixed composition comprising an organosilicon compound (C) having an amino group or an amine skeleton, a solvent 1, and a solvent 2,
wherein, when a ratio of a hydrogen bond term (δH) to a dispersion term (δD) in Hansen solubility parameters is defined as δH/δD, the ratio (δH/δD) for the solvent 1 is less than 0.410 and the ratio (δH/δD) for the solvent 2 is 0.410 or more.
[2] The composition described in [1], wherein a mass ratio of the solvent 2 to the solvent 1 is 0.01% by mass or more and 250% by mass or less.
[3] The composition described in [1] or [2], wherein the solvent 2 contains a non-fluorinated alcohol solvent 2-A, or an organic solvent 2-B having a Hansen solubility parameter distance Ra of 5 $(J/cm^3)^{0.5}$ or less from the organosilicon compound (C), as calculated according to expression (E.1): [Expression 1]

$$Ra = \sqrt{4(\delta D1 - \delta D2)^2 + (\delta P1 - \delta P2)^2 + (\delta H1 - \delta H2)^2} \qquad (E.1)$$

wherein

δD1 is a dispersion term $(J/cm^3)^{0.5}$ in Hansen solubility parameters of the organosilicon compound (C);
δD2 is a dispersion term $(J/cm^3)^{0.5}$ in Hansen solubility parameters of the organic solvent 2-B;

$\delta P1$ is a polarity term $(J/cm^3)^{0.5}$ in Hansen solubility parameters of the organosilicon compound (C);
$\delta P2$ is a polarity term $(J/cm^3)^{0.5}$ in Hansen solubility parameters of the organic solvent 2-B;
$\delta H1$ is a hydrogen bond term $(J/cm^3)^{0.5}$ in Hansen solubility parameters of the organosilicon compound (C); and
$\delta H2$ is a hydrogen bond term $(J/cm^3)^{0.5}$ in Hansen solubility parameters of the organic solvent 2-B.

[4] The composition described in [3], wherein the solvent 2 contains the non-fluorinated alcohol solvent 2-A and the organic solvent 2-B.
[5] The composition described in any one of [1] to [4], wherein the solvent 1 is an ester solvent.
[6] The composition described in any one of [1] to [5], wherein a hydrolyzable group or a hydroxy group is bonded to at least one silicon atom in the organosilicon compound (C).
[7] The composition described in any one of [1] to [6], wherein the organosilicon compound (C) is a compound represented by any of the following formulas (c1) to (c3) :

[Formula 1]

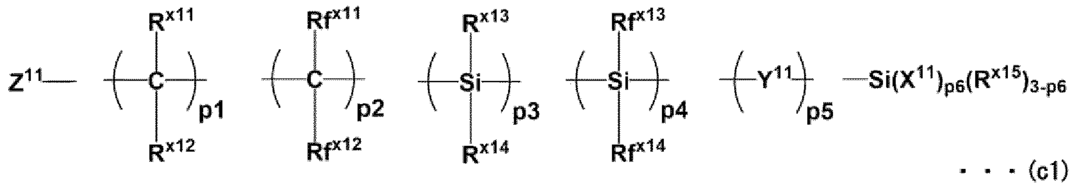

· · · (c1)

wherein

$R^{x11}$, $R^{x12}$, $R^{x13}$, and $R^{x14}$ are each independently a hydrogen atom or an alkyl group having 1 to 4 carbon atoms, and when there is a plurality of $R^{x11}$, the plurality of $R^{x11}$ is optionally different from each other, when there is a plurality of $R^{x12}$, the plurality of $R^{x12}$ is optionally different from each other, when there is a plurality of $R^{x13}$, the plurality of $R^{x13}$ is optionally different from each other, and when there is a plurality of $R^{x14}$, the plurality of $R^{x14}$ is optionally different from each other;
$Rf^{x11}$, $Rf^{x12}$, $Rf^{x13}$, and $Rf^{x14}$ are each independently an alkyl group having 1 to 20 carbon atoms in which one or more hydrogen atoms are replaced by fluorine atoms, or a fluorine atom, and when there is a plurality of $Rf^{x11}$, the plurality of $Rf^{x11}$ is optionally different from each other, when there is a plurality of $Rf^{x12}$, the plurality of $Rf^{x12}$ is optionally different from each other, when there is a plurality of $Rf^{x13}$, the plurality of $Rf^{x13}$ is optionally different from each other, and when there is a plurality of $Rf^{x14}$, the plurality of $Rf^{x14}$ is optionally different from each other;
$R^{x15}$ is an alkyl group having 1 to 20 carbon atoms, and when there is a plurality of $R^{x15}$, the plurality of $R^{x15}$ is optionally different from each other;
$X^{11}$ is a hydrolyzable group, and when there is a plurality of $X^{11}$, the plurality of $X^{11}$ is optionally different from each other;
$Y^{11}$ is -NH- or -S-, and when there is a plurality of $Y^{11}$, the plurality of $Y^{11}$ is optionally different from each other;
$Z^{11}$ is a vinyl group, an $\alpha$-methylvinyl group, a styryl group, a methacryloyl group, an acryloyl group, an amino group, an isocyanate group, an isocyanurate group, an epoxy group, a ureido group, or a mercapto group;
p1 is an integer of 1 to 20, p2, p3, and p4 are each independently an integer of 0 to 10, and p5 is an integer of 0 to 10;
p6 is an integer of 1 to 3;
when $Z^{11}$ is not an amino group, there is at least one $Y^{11}$ that is -NH-, and when $Y^{11}$ is all -S- or when p5 is 0, $Z^{11}$ is an amino group; and
as for $Z^{11}$-, $-Si(X^{11})_{p6}(R^{x15})_{3-p6}$, p1 $-\{C(R^{x11})(R^{x12})\}$-units ($U_{c11}$), p2 $-\{C(Rf^{x11})(Rf^{x12})\}$- units ($U_{c12}$), p3 $-\{Si(R^{x13})(R^{x14})\}$- units ($U_{c13}$), p4 $-\{Si(Rf^{x13})(Rf^{x14})\}$- units ($U_{c14}$), and p5 $-Y^{11}$- units ($U_{c15}$), each unit ($U_{c11}$) to unit ($U_{c15}$) is arranged and bonded in any order as long as $Z^{11}$-is one end of the compound represented by formula (c1), $-Si(X^{11})_{p6}(R^{x15})_{3-p6}$ is the other end, and -O- is not linked to -O-,

[Formula 2]

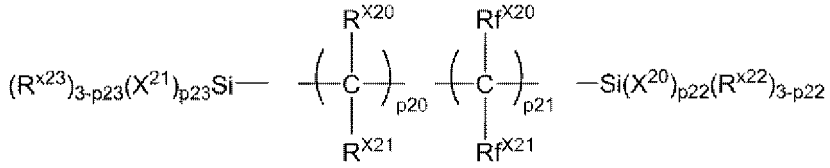

(c2)

wherein

$R^{x20}$ and $R^{x21}$ are each independently a hydrogen atom or an alkyl group having 1 to 4 carbon atoms, and when there is a plurality of $R^{x20}$, the plurality of $R^{x20}$ is optionally different from each other and when there is a plurality of $R^{x21}$, the plurality of $R^{x21}$ is optionally different from each other;

$Rf^{x20}$ and $Rf^{x21}$ are each independently an alkyl group having 1 to 20 carbon atoms in which one or more hydrogen atoms are replaced by fluorine atoms, or a fluorine atom, and when there is a plurality of $Rf^{x20}$, the plurality of $Rf^{x20}$ is optionally different from each other and when there is a plurality of $Rf^{x21}$, the plurality of $Rf^{x21}$ is optionally different from each other;

$R^{x22}$ and $R^{x23}$ are each independently an alkyl group having 1 to 20 carbon atoms, and when there is a plurality of $R^{x22}$ and $R^{x23}$, the plurality of $R^{x22}$ and $R^{x23}$ is optionally different from each other;

$X^{20}$ and $X^{21}$ are each independently a hydrolyzable group, and when there is a plurality of $X^{20}$ and $X^{21}$, the plurality of $X^{20}$ and $X^{21}$ is optionally different from each other;

p20 is each independently an integer of 1 to 30, p21 is each independently an integer of 0 to 30, and at least one of repeating units in parentheses subscripted with p20 or p21 is replaced by an amine skeleton $-NR^{100}-$, where $R^{100}$ in the amine skeleton is a hydrogen atom or an alkyl group;

p22 and p23 are each independently an integer of 1 to 3; and

as for p20 $-\{C(R^{x20})(R^{x21})\}-$ units ($U_{c21}$) and p21 $-\{C(Rf^{x20})(Rf^{x21})\}-$ units ($U_{c22}$), p20 units ($U_{c21}$) or p21 units ($U_{c22}$) are not necessarily consecutive, but each unit ($U_{c21}$) and unit ($U_{c22}$)is arranged and bonded in any order, and one end of the compound represented by formula (c2) is $-Si(X^{20})_{p22}(R^{x22})_{3-p22}$ and the other end is $-Si(X^{21})_{p23}(R^{x23})_{3-p23}$, and

[Formula 3]

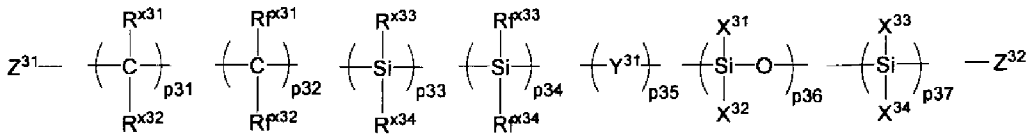

・・・(c3)

wherein

$Z^{31}$ and $Z^{32}$ are each independently a reactive functional group other than hydrolyzable and hydroxy groups;

$R^{x31}$, $R^{x32}$, $R^{x33}$, and $R^{x34}$ are each independently a hydrogen atom or an alkyl group having 1 to 4 carbon atoms, and when there is a plurality of $R^{x31}$, the plurality of $R^{x31}$ is optionally different from each other, when there is a plurality of $R^{x32}$, the plurality of $R^{x32}$ is optionally different from each other, when there is a plurality of $R^{x33}$, the plurality of $R^{x33}$ is optionally different from each other, and when there is a plurality of $R^{x34}$, the plurality of $R^{x34}$ is optionally different from each other;

$Rf^{x31}$, $Rf^{x32}$, $Rf^{x33}$, and $Rf^{x34}$ are each independently an alkyl group having 1 to 20 carbon atoms in which one or more hydrogen atoms are replaced by fluorine atoms, or a fluorine atom, and when there is a plurality of $Rf^{x31}$, the plurality of $Rf^{x31}$ is optionally different from each other, when there is a plurality of $Rf^{x32}$, the plurality of $Rf^{x32}$ is optionally different from each other, when there is a plurality of $Rf^{x33}$, the plurality of $Rf^{x33}$ is optionally different from each other, and when there is a plurality of $Rf^{x34}$, the plurality of $Rf^{x34}$ is optionally different from each other;

$Y^{31}$ is -NH-, $-N(CH_3)-$, or -O-, and when there is a plurality of $Y^{31}$, the plurality of $Y^{31}$ is optionally different from each other;

$X^{31}$, $X^{32}$, $X^{33}$, and $X^{34}$ are each independently $-OR^c$, where $R^c$ is a hydrogen atom, an alkyl group having 1 to 4 carbon atoms, or an amino-$C_{1-3}$ alkyl-di-$C_{1-3}$ alkoxysilyl group, and when there is a plurality of $X^{31}$, the plurality of $X^{31}$ is optionally different from each other, when there is a plurality of $X^{32}$, the plurality of $X^{32}$ is optionally

different from each other, when there is a plurality of $X^{33}$, the plurality of $X^{33}$ is optionally different from each other, and when there is a plurality of $X^{34}$, the plurality of $X^{34}$ is optionally different from each other;

p31 is an integer of 0 to 20, p32, p33, and p34 are each independently an integer of 0 to 10, p35 is an integer of 0 to 5, p36 is an integer of 1 to 10, and p37 is 0 or 1; and

p31 -{$C(R^{x31})(R^{x32})$}- units ($U_{c31}$), p32 - {$C(Rf^{x31})(Rf^{x32})$}- units ($U_{c32}$), p33 -{$Si(R^{x33})(R^{x34})$}- units ($U_{c33}$), p34 -{$Si(Rf^{x33})(Rf^{x34})$}- units ($U_{c34}$), p35 -$Y^{31}$-units ($U_{c35}$), p36 -{$Si(X^{31})(X^{32})$-O}- units ($U_{c36}$), and p37 - {$Si(X^{33})(X^{34})$}- units ($U_{c37}$) are each arranged and bonded in any order when a condition is satisfied that at least one of $Z^{31}$ and $Z^{32}$ is an amino group or at least one $Y^{31}$ is -NH- or -$N(CH_3)$-, and as long as one end of the compound represented by formula (c3) is $Z^{31}$-, the other end is $Z^{32}$-, and -O- is not linked to -O-.

[8] The composition described in any one of [1] to [7], wherein a content of the organosilicon compound (C) is 0.005% by mass or more and 5% by mass or less.

[9] A laminated body in which a substrate (s) and a water repellent layer (r) are laminated via an intermediate layer (c), wherein the intermediate layer (c) is a layer formed from the composition described in any one of [1] to [8].

[10] The laminated body described in [9], wherein the substrate (s) is a substrate composed of an organic material.

[11] A window film or touch panel display comprising the laminated body described in [9] or [10].

[Advantageous Effect of Invention]

According to the present invention, a composition with excellent storage stability can be provided.

[Description of Embodiments]

<Composition>

A composition of the present invention is a mixed composition of an organosilicon compound (C) having an amino group or an amine skeleton, a solvent 1, and a solvent 2, characterized by that, when the ratio of the hydrogen bond term (δH) to the dispersion term (δD) in the Hansen solubility parameters is defined as δH/δD, the ratio (δH/δD) for the solvent 1 is less than 0.410 and the ratio (δH/δD) for the solvent 2 is 0.410 or more. Note that the present invention also includes one in which the reaction has progressed after mixing the above components, for example, during storage. The organosilicon compound (C), the solvent 1, and the solvent 2 will be described one by one below.

1. Organosilicon compound (C)

The organosilicon compound (C) is an organosilicon compound having an amino group or an amine skeleton. By mixing the organosilicon compound (C) in the composition of the present invention, an intermediate layer (c) formed from the composition can function as a primer layer for a water repellent layer (r) in a laminated body, which will be described later. Therefore, in the laminated body, which will be described later, the adhesiveness of the water repellent layer (r) to a substrate (s) is good, and as a result, the wear resistance of the laminated body can be improved.

The organosilicon compound (C) mixed in the composition of the present invention may be one type or two or more types. As the organosilicon compound (C), one having one or more amine skeletons is preferred. Note that the amine skeleton is represented by -$NR^{10}$-, where $R^{10}$ is hydrogen or an alkyl group. It is preferable that $R^{10}$ be hydrogen or an alkyl group having 1 to 5 carbon atoms. Also, in the case where a plurality of amine skeletons is included in the organosilicon compound (C), the plurality of amine skeletons may be the same as or different from each other.

It is preferable that a hydrolyzable group or a hydroxy group be bonded to at least one silicon atom in the organosilicon compound (C). Examples of the hydrolyzable group include an alkoxy group, a halogen atom, a cyano group, an acetoxy group, and an isocyanate group. It is preferable that an alkoxy group having 1 to 4 carbon atoms or a hydroxy group be bonded to a silicon atom of the organosilicon compound (C).

It is preferable that the organosilicon compound (C) be a compound represented by any of the following formulas (c1) to (c3).

1-1. Organosilicon compound (C) represented by the following formula (c1) (hereinafter, organosilicon compound (C1))

[Formula 4]

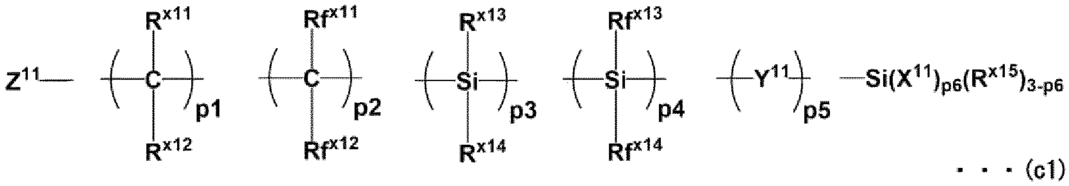

· · · (c1)

In the above formula (c1),

$R^{x11}$, $R^{x12}$, $R^{x13}$, and $R^{x14}$ are each independently a hydrogen atom or an alkyl group having 1 to 4 carbon atoms, and when there is a plurality of $R^{x11}$, the plurality of $R^{x11}$ is optionally different from each other, when there is a plurality of $R^{x12}$, the plurality of $R^{x12}$ is optionally different from each other, when there is a plurality of $R^{x13}$, the plurality of $R^{x13}$ is optionally different from each other, and when there is a plurality of $R^{x14}$, the plurality of $R^{x14}$ is optionally different from each other;

$Rf^{x11}$, $Rf^{x12}$, $Rf^{x13}$, and $Rf^{x14}$ are each independently an alkyl group having 1 to 20 carbon atoms in which one or more hydrogen atoms are replaced by fluorine atoms, or a fluorine atom, and when there is a plurality of $Rf^{x11}$, the plurality of $Rf^{x11}$ is optionally different from each other, when there is a plurality of $Rf^{x12}$, the plurality of $Rf^{x12}$ is optionally different from each other, when there is a plurality of $Rf^{x13}$, the plurality of $Rf^{x13}$ is optionally different from each other, and when there is a plurality of $Rf^{x14}$, the plurality of $Rf^{x14}$ is optionally different from each other;

$R^{x15}$ is an alkyl group having 1 to 20 carbon atoms, and when there is a plurality of $R^{x15}$, the plurality of $R^{x15}$ is optionally different from each other;

$X^{11}$ is a hydrolyzable group, and when there is a plurality of $X^{11}$, the plurality of $X^{11}$ is optionally different from each other;

$Y^{11}$ is -NH- or -S-, and when there is a plurality of $Y^{11}$, the plurality of $Y^{11}$ is optionally different from each other;

$Z^{11}$ is a vinyl group, an α-methylvinyl group, a styryl group, a methacryloyl group, an acryloyl group, an amino group, an isocyanate group, an isocyanurate group, an epoxy group, a ureido group, or a mercapto group;

p1 is an integer of 1 to 20, p2, p3, and p4 are each independently an integer of 0 to 10, and p5 is an integer of 0 to 10;

p6 is an integer of 1 to 3;

when $Z^{11}$ is not an amino group, there is at least one $Y^{11}$ that is -NH-, and when $Y^{11}$ is all -S- or when p5 is 0, $Z^{11}$ is an amino group; and

as for $Z^{11}$-, $-S1(X^{11})_{p6}(R^{x15})_{3-p6}$, p1 $-\{C(R^{x11})(R^{x12})\}$-units ($U_{c11}$), p2 $-\{C(Rf^{x11})(Rf^{x12})\}$- units ($U_{c12}$), p3 $-\{Si(R^{x13})(R^{x14})\}$- units ($U_{c13}$), p4 $-\{Si(Rf^{x13})(Rf^{x14})\}$- units ($U_{c14}$), and p5 $-Y^{11}$- units ($U_{c15}$), each unit ($U_{c11}$) to unit ($U_{c15}$) is arranged and bonded in any order as long as $Z^{11}$-is one end of the compound represented by formula (c1), $- Si (X^{11})_{p6}(R^{x15})_{3-p6}$ is the other end, and -O- is not linked to -O-.

It is preferable that $R^{x11}$, $R^{x12}$, $R^{x13}$, and $R^{x14}$ be each a hydrogen atom.

It is preferable that $Rf^{x11}$, $Rf^{x12}$, $Rf^{x13}$, and $Rf^{x14}$ be each independently an alkyl group having 1 to 10 carbon atoms in which one or more hydrogen atoms are replaced by fluorine atoms, or a fluorine atom.

It is preferable that $R^{x15}$ be an alkyl group having 1 to 5 carbon atoms.

It is preferable that $X^{11}$ be an alkoxy group, a halogen atom, a cyano group, or an isocyanate group, it is more preferable that it be an alkoxy group, it is still more preferable that it be an alkoxy group having 1 to 4 carbon atoms, and it is particularly preferable that it be a methoxy group or an ethoxy group.

It is preferable that $Y^{11}$ be -NH-.

It is preferable that $Z^{11}$ be a methacryloyl group, an acryloyl group, a mercapto group, or an amino group, it is more preferable that it be a mercapto group or an amino group, and it is particularly preferable that it be an amino group.

p1 is preferably 1 to 15, and more preferably 2 to 10. Preferably, p2, p3, and p4 are each independently 0 to 5, and more preferably, they are all 0 to 2. p5 is preferably 0 to 5, more preferably 0 to 3, and still more preferably 1 to 3. p6 is preferably 2 to 3, and more preferably 3.

As the organosilicon compound (C), it is preferable to use a compound in which $R^{x11}$ and $R^{x12}$ are both hydrogen atoms; $Y^{11}$ is -NH-; $X^{11}$ is an alkoxy group (in particular a methoxy group or an ethoxy group); $Z^{11}$ is an amino group or a mercapto group; p1 is 1 to 10; p2, p3, and p4 are all 0; p5 is 0 to 5 (in particular 1 to 3); and p6 is 3 in the above formula (c1).

Note that, as for p1 units ($U_{c11}$), the units ($U_{c11}$) are not necessarily consecutively bonded, and they may be bonded via other units in the middle, as long as there are p1 units in total. The same applies to units ($U_{c12}$) to units ($U_{c15}$) bracketed by p2 to p5, respectively.

It is preferable that the organosilicon compound (C1) be represented by the following formula (c1-2).

[Formula 5]

$$Z^{12}\text{-}C_qH_{2q}\left(Y^{12}\right)_s C_rH_{2r}-Si(X^{12})_p(R^{x16})_{3-p} \quad \cdots (c1\text{-}2)$$

In the above formula (c1-2),

$X^{12}$ is a hydrolyzable group, and when there is a plurality of $X^{12}$, the plurality of $X^{12}$ is optionally different from each other;
$Y^{12}$ is -NH-;
$Z^{12}$ is an amino group or a mercapto group;
$R^{x16}$ is an alkyl group having 1 to 20 carbon atoms, and when there is a plurality of $R^{x16}$, the plurality of $R^{x16}$ is optionally different from each other;
p is an integer of 1 to 3, q is an integer of 2 to 5, r is an integer of 0 to 5, and s is 0 or 1; and
when s is 0, $Z^{12}$ is an amino group.

It is preferable that $X^{12}$ be an alkoxy group, a halogen atom, a cyano group, or an isocyanate group, it is more preferable that it be an alkoxy group, it is still more preferable that it be an alkoxy group having 1 to 4 carbon atoms, and it is particularly preferable that it be a methoxy group or an ethoxy group.
It is preferable that $Z^{12}$ be an amino group.
It is preferable that $R^{x16}$ be an alkyl group having 1 to 10 carbon atoms, and it is more preferable that it be an alkyl group having 1 to 5 carbon atoms.
It is preferable that p be an integer of 2 to 3, and it is more preferable that it be 3.
When s is 1, it is preferable that q be an integer of 2 to 3 and r be an integer of 2 to 4, and when s is 0, it is preferable that the total of q and r be 1 to 5.

1-2. Organosilicon compound (C) represented by the following formula (c2) (hereinafter, organosilicon compound (C2))

[Formula 6]

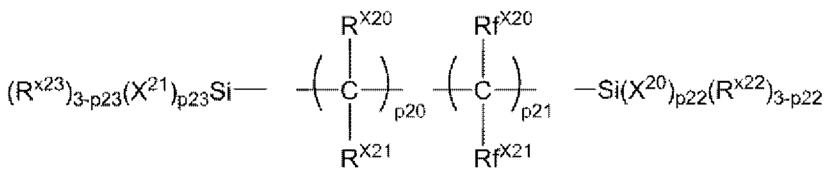
(c2)

In the above formula (c2),

$R^{x20}$ and $R^{x21}$ are each independently a hydrogen atom or an alkyl group having 1 to 4 carbon atoms, and when there is a plurality of $R^{x20}$, the plurality of $R^{x20}$ is optionally different from each other and when there is a plurality of $R^{x21}$, the plurality of $R^{x21}$ is optionally different from each other;
$Rf^{x20}$ and $Rf^{x21}$ are each independently an alkyl group having 1 to 20 carbon atoms in which one or more hydrogen atoms are replaced by fluorine atoms, or a fluorine atom, and when there is a plurality of $Rf^{x20}$, the plurality of $Rf^{x20}$ is optionally different from each other and when there is a plurality of $Rf^{x21}$, the plurality of $Rf^{x21}$ is optionally different from each other;
$R^{x22}$ and $R^{x23}$ are each independently an alkyl group having 1 to 20 carbon atoms, and when there is a plurality of $R^{x22}$ and $R^{x23}$, the plurality of $R^{x22}$ and $R^{x23}$ is optionally different from each other;
$X^{20}$ and $X^{21}$ are each independently a hydrolyzable group, and when there is a plurality of $X^{20}$ and $X^{21}$, the plurality of $X^{20}$ and $X^{21}$ is optionally different from each other;
p20 is an integer of 1 to 30, p21 is an integer of 0 to 30, and at least one of repeating units in parentheses subscripted with p20 or p21 is replaced by an amine skeleton $-NR^{100}-$, where $R^{100}$ in the amine skeleton is a hydrogen atom or an alkyl group;
p22 and p23 are each independently an integer of 1 to 3; and
as for p20 $-\{C(R^{x20})(R^{x21})\}-$ units ($U_{c21}$) and p21 $-\{C(Rf^{x20})(Rf^{x21})\}-$ units ($U_{c22}$), p20 units ($U_{c21}$) or p21 units ($U_{c22}$)

are not necessarily consecutive, but each unit ($U_{c21}$) and unit ($U_{c22}$) is arranged and bonded in any order, and one end of the compound represented by formula (c2) is $-Si(X^{20})_{p22}(R^{x22})_{3-p22}$ and the other end is $-Si(X^{21})_{p23}(R^{x23})_{3-p23}$.

It is preferable that $R^{x20}$ and $R^{x21}$ be each a hydrogen atom.

It is preferable that $Rf^{x20}$ and $Rf^{x21}$ be each independently an alkyl group having 1 to 10 carbon atoms in which one or more hydrogen atoms are replaced by fluorine atoms, or a fluorine atom.

It is preferable that $R^{x22}$ and $R^{x23}$ be each an alkyl group having 1 to 5 carbon atoms.

It is preferable that $X^{20}$ and $X^{21}$ be each an alkoxy group, a halogen atom, a cyano group, or an isocyanate group, it is more preferable that they be each an alkoxy group, it is still more preferable that they be each an alkoxy group having 1 to 4 carbon atoms, and it is particularly preferable that they be each a methoxy group or an ethoxy group.

The amine skeleton $-NR^{100}-$ only needs to be present at least once in the molecule as described above and any of the repeating units in parentheses subscripted with p20 or p21 may be replaced by the amine skeleton, but it is preferable that it be part of the repeating units in parentheses subscripted with p20. The amine skeleton may be present in plurality, in which case it is preferable that the number of amine skeletons be 1 to 10, it is more preferable that it be 1 to 5, and it is still more preferable that it be 2 to 5. Also, in this case, it is preferable that the compound have $-\{C(R^{x20})(R^{x21})\}_{p200}-$between adjacent amine skeletons, where it is preferable that p200 be 1 to 10 and it is more preferable that it be 1 to 5. p200 is included in the total number of p20.

When $R^{100}$ in the amine skeleton $-NR^{100}-$ is an alkyl group, it is preferable that the number of carbon atoms be 5 or less and it is more preferable that it be 3 or less. It is preferable that the amine skeleton $-NR^{100}-$ be -NH- ($R^{100}$ be a hydrogen atom) .

p20 is preferably 1 to 15, and more preferably 1 to 10, except for the number of repeating units replaced by the amine skeleton.

p21 is preferably 0 to 5, and more preferably 0 to 2, except for the number of repeating units replaced by the amine skeleton.

p22 and p23 are each preferably 2 to 3, and more preferably 3.

As the organosilicon compound (C2), it is preferable to use a compound in which $R^{x20}$ and $R^{x21}$ are both hydrogen atoms; $X^{20}$ and $X^{21}$ are each an alkoxy group (in particular a methoxy group or an ethoxy group); at least one of the repeating units in parentheses subscripted with p20 is replaced by the amine skeleton $-NR^{100}-$; $R^{100}$ is a hydrogen atom; p20 is 1 to 10 (provided that the number of repeating units replaced by the amine skeleton is excluded); p21 is 0; p22 and p23 are each 3 in the above formula (c2).

Note that, when a reaction product of N-2-(aminoethyl)-3-aminopropyltrimethoxysilane and chloropropyltrimethoxysilane (trade name; X-12-5263HP, manufactured by Shin-Etsu Chemical Co., Ltd.) disclosed in Japanese Patent Laid-Open No. 2012-197330, which is used as the compound (C) in Examples, which will be described later, is represented by the above formula (c2), $R^{x20}$ and $R^{x21}$ are both hydrogen atoms; p20 is 8 (provided that the number of repeating units replaced by the amine skeleton is excluded); p21 is 0; the number of amine skeletons is 2 ($R^{100}$ is a hydrogen atom in both cases); both ends are the same; p22 and p23 are each 3; and $X^{20}$ and $X^{21}$ are each a methoxy group.

It is preferable that the organosilicon compound (C2) be a compound represented by the following formula (c2-2) .

[Formula 7]

$$(R^{x25})_{3-p25}(X^{23})_{p25}Si-C_wH_{2w}-Si(X^{22})_{p24}(R^{x24})_{3-p24} \qquad (c2\text{-}2)$$

In the above formula (c2-2),

$X^{22}$ and $X^{23}$ are each independently a hydrolyzable group, and when there is a plurality of $X^{22}$ and $X^{23}$, the plurality of $X^{22}$ and $X^{23}$ is optionally different from each other;
$R^{x24}$ and $R^{x25}$ are each independently an alkyl group having 1 to 20 carbon atoms, and when there is a plurality of $R^{x24}$ and $R^{x23}$, the plurality of $R^{x24}$ and $R^{x23}$ is optionally different from each other;
as for $-C_wH_{2w}-$, at least one of methylene groups, which are part thereof, is replaced by an amine skeleton $-NR^{100}-$, where $R^{100}$ is a hydrogen atom or an alkyl group;
w is an integer of 1 to 30 (provided that the number of methylene groups replaced by the amine skeleton is excluded); and
p24 and p25 are each independently an integer of 1 to 3.

It is preferable that $X^{22}$ and $X^{23}$ be each an alkoxy group, a halogen atom, a cyano group, or an isocyanate group, it is more preferable that they be each an alkoxy group, it is still more preferable that they be each an alkoxy

group having 1 to 4 carbon atoms, and it is particularly preferable that they be each a methoxy group or an ethoxy group.

The amine skeleton $-NR^{100}-$ may be present in plurality, in which case it is preferable that the number of amine skeletons be 1 to 10, it is more preferable that it be 1 to 5, and it is still more preferable that it be 2 to 5. Also, in this case, it is preferable that the compound have an alkylene group between adjacent amine skeletons. It is preferable that the number of carbon atoms in the alkylene group be 1 to 10, and it is more preferable that it be 1 to 5. The number of carbon atoms in the alkylene group between adjacent amine skeletons is included in the total number of w.

When $R^{100}$ in the amine skeleton $-NR^{100}-$ is an alkyl group, it is preferable that the number of carbon atoms be 5 or less and it is more preferable that it be 3 or less. It is preferable that the amine skeleton $-NR^{100}-$ be -NH- ($R^{100}$ be a hydrogen atom) .

It is preferable that $R^{x24}$ and $R^{x25}$ be each an alkyl group having 1 to 10 carbon atoms, and it is more preferable that they be each an alkyl group having 1 to 5 carbon atoms.

It is preferable that p24 and p25 be each an integer of 2 to 3, and it is more preferable that they be each 3.

It is preferable that w be 1 or more, it is more preferable that it be 2 or more, and it is also preferable that it be 20 or less, and it is more preferable that it be 10 or less.

1-3. Organosilicon compound (C) represented by the following formula (c3) (hereinafter, organosilicon compound (C3))

[Formula 8]

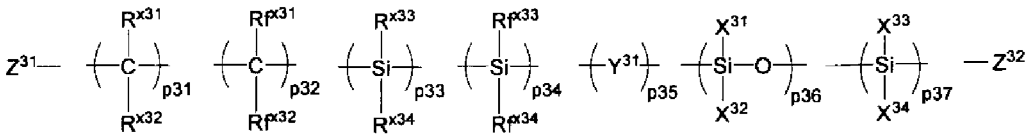

・・・(c3)

In the above formula (c3),

$Z^{31}$ and $Z^{32}$ are each independently a reactive functional group other than hydrolyzable and hydroxy groups. Examples of the reactive functional group include a vinyl group, an $\alpha$-methylvinyl group, a styryl group, a methacryloyl group, an acryloyl group, an amino group, an epoxy group, a ureido group, or a mercapto group. As $Z^{31}$ and $Z^{32}$, an amino group, a mercapto group, or a methacryloyl group is preferred, and an amino group is particularly preferred.

$R^{x31}$, $R^{x32}$, $R^{x33}$, and $R^{x34}$ are each independently a hydrogen atom or an alkyl group having 1 to 4 carbon atoms, and when there is a plurality of $R^{x31}$, the plurality of $R^{x31}$ is optionally different from each other, when there is a plurality of $R^{x32}$, the plurality of $R^{x32}$ is optionally different from each other, when there is a plurality of $R^{x33}$, the plurality of $R^{x33}$ is optionally different from each other, and when there is a plurality of $R^{x34}$, the plurality of $R^{x34}$ is optionally different from each other. It is preferable that $R^{x31}$, $R^{x32}$, $R^{x33}$, and $R^{x34}$ be each a hydrogen atom or an alkyl group having 1 to 2 carbon atoms, and it is more preferable that they be each a hydrogen atom.

$Rf^{x31}$, $Rf^{x32}$, $Rf^{x33}$, and $Rf^{x34}$ are each independently an alkyl group having 1 to 20 carbon atoms in which one or more hydrogen atoms are replaced by fluorine atoms, or a fluorine atom, and when there is a plurality of $Rf^{x31}$, the plurality of $Rf^{x31}$ is optionally different from each other, when there is a plurality of $Rf^{x32}$, the plurality of $Rf^{x32}$ is optionally different from each other, when there is a plurality of $Rf^{x33}$, the plurality of $Rf^{x33}$ is optionally different from each other, and when there is a plurality of $Rf^{x34}$, the plurality of $Rf^{x34}$ is optionally different from each other. It is preferable that $Rf^{x31}$, $Rf^{x32}$, $Rf^{x33}$, and $Rf^{x34}$ be each an alkyl group having 1 to 10 carbon atoms in which one or more hydrogen atoms are replaced by fluorine atoms, or a fluorine atom.

$Y^{31}$ is -NH-, $-N(CH_3)-$, or -O-, and when there is a plurality of $Y^{31}$, the plurality of $Y^{31}$ is optionally different from each other. It is preferable that $Y^{31}$ be - NH-.

$X^{31}$, $X^{32}$, $X^{33}$, and $X^{34}$ are each independently $-OR^c$, where $R^c$ is a hydrogen atom, an alkyl group having 1 to 4 carbon atoms, or an amino-$C_{1-3}$ alkyl-di-$C_{1-3}$ alkoxysilyl group, and when there is a plurality of $X^{31}$, the plurality of $X^{31}$ is optionally different from each other, when there is a plurality of $X^{32}$, the plurality of $X^{32}$ is optionally different from each other, when there is a plurality of $X^{33}$, the plurality of $X^{33}$ is optionally different from each other, and when there is a plurality of $X^{34}$, the plurality of $X^{34}$ is optionally different from each other. It is preferable that $X^{31}$, $X^{32}$, $X^{33}$, and $X^{34}$ be $-OR^c$, where $R^c$ is a hydrogen atom or an alkyl group having 1 to 2 carbon atoms, and it is more preferable that $R^c$ be a hydrogen atom.

p31 is an integer of 0 to 20, p32, p33, and p34 are each independently an integer of 0 to 10, p35 is an integer of 0

to 5, p36 is an integer of 1 to 10, and p37 is 0 or 1. p31 is preferably 1 to 15, more preferably 3 to 13, and still more preferably 5 to 10. Preferably, p32, p33, and p34 are each independently 0 to 5, and more preferably, they are all 0 to 2. p35 is preferably 0 to 3. p36 is preferably 1 to 5, and more preferably 1 to 3. p37 is preferably 1.

The organosilicon compound (C3) is constituted such that p31 -{C($R^{x31}$)($R^{x32}$)}- units ($U_{c31}$), p32 -{C($Rf^{x31}$)($Rf^{x32}$)}- units ($U_{c32}$), p33 -{Si($R^{x33}$)($R^{x34}$)}- units ($U_{c33}$), p34 -{Si($Rf^{x33}$)($Rf^{x34}$)}- units ($U_{c34}$), p35 -$Y^{31}$-units ($U_{c35}$), p36 -{Si($X^{31}$)($X^{32}$)-O}- units ($U_{c36}$), and p37 - {Si($X^{33}$)($X^{34}$)}- units ($U_{c37}$) are each arranged and bonded in any order when the condition is satisfied that at least one of $Z^{31}$ and $Z^{32}$ is an amino group or at least one $Y^{31}$ is -NH- or -N($CH_3$)-, and as long as one end of the compound represented by formula (c3) is $Z^{31}$-, the other end is $Z^{32}$-, and -O- is not linked to -O-. As for p31 units ($U_{c31}$), the units ($U_{c31}$) are not necessarily consecutively bonded, and they may be bonded via other units in the middle, as long as there are p31 units in total. The same applies to units ($U_{c32}$) to units ($U_{c37}$) bracketed by p32 to p37, respectively.

As the organosilicon compound (C3), a compound is preferred in which $Z^{31}$ and $Z^{32}$ are each an amino group; $R^{x31}$ and $R^{x32}$ are each a hydrogen atom; p31 is 3 to 13 (preferably 5 to 10) ; $R^{x33}$ and $R^{x34}$ are both hydrogen atoms; $Rf^{x31}$ to $Rf^{x34}$ are all alkyl groups having 1 to 10 carbon atoms in which one or more hydrogen atoms are replaced by fluorine atoms, or fluorine atoms; p32 to p34 are all 0 to 5; $Y^{31}$ is -NH-; p35 is 0 to 5 (preferably 0 to 3); $X^{31}$ to $X^{34}$ are all -OH; p36 is 1 to 5 (preferably 1 to 3); and p37 is 1.

It is preferable that the organosilicon compound (C3) be represented by the following formula (c3-2).

[Formula 9]

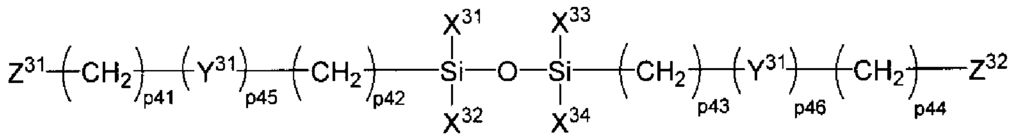

・・・(c3-2)

In the above formula (c3-2), $Z^{31}$, $Z^{32}$, $X^{31}$, $X^{32}$, $X^{33}$, $X^{34}$, and $Y^{31}$ have the same meaning as those in formula (c3), p41 to p44 are each independently an integer of 1 to 6, and p45 and p46 are each independently 0 or 1.

In formula (c3-2), as $Z^{31}$ and $Z^{32}$, an amino group, a mercapto group, or a methacryloyl group is preferred, and an amino group is particularly preferred. It is preferable that $X^{31}$, $X^{32}$, $X^{33}$, and $X^{34}$ be -$OR^c$, where $R^c$ is a hydrogen atom or an alkyl group having 1 to 2 carbon atoms, and it is more preferable that $R^c$ be a hydrogen atom. It is preferable that $Y^{31}$ be -NH-. p41 to p44 are each preferably 1 or more, and also preferably 5 or less, and more preferably 4 or less. It is preferable that p45 and p46 be both 0.

The composition of the present invention is a composition in which the organosilicon compound (C), and the solvents 1 and 2, which will be described later, are mixed. The composition of the present invention is obtained by mixing the organosilicon compound (C), the solvent 1, and the solvent 2, or in the case where a component other than the above components is mixed, by mixing the organosilicon compound (C), the solvent 1 and the solvent 2, and the other component. The composition of the present invention also includes one in which the reaction has progressed after mixing, for example, during storage, and examples of the reaction that has progressed include a case in which the composition contains a compound in which a hydrolyzable group bonded to a silicon atom of the above organosilicon compound (C) has become a -SiOH group due to hydrolysis. Other examples of the reaction that has progressed during storage of the composition include a case in which the composition contains a condensation product of the organosilicon compound (C), and examples of the condensation product include a condensation product formed by dehydration condensation of a -SiOH group that the organosilicon compound (C) has or a -SiOH group of the organosilicon compound (C) generated by hydrolysis with a -SiOH group derived from the organosilicon compound (C), or with a - SiOH group derived from another compound. More specifically, examples of the condensation product include an organosilicon compound (C3') in which the organosilicon compounds (C3) are condensed and bonded via at least any of the above $X^{31}$ to $X^{34}$.

The organosilicon compound (C3') is a compound having two or more structures (c31-1) represented by the following formula (c31-1) and the structures (c31-1) are bonded to each other in a chain or ring form via *3 or *4 below, wherein the bond via *3 or *4 below is due to condensation via $X^{31}$ or $X^{32}$ of the two or more organosilicon compounds (C3);

to each of *1 and *2 of the following formula (c31-1) is bonded a group in which at least one of the units bracketed by p31, p32, p33, p34, p35, (p36)-1, and p37 of the following formula (c31-2) is bonded in any order and the end is Z-, and for each of the plurality of structures (c31-1), the groups bonded to *1 and *2 may be different; and

when the plurality of structures (c31-1) is bonded in a chain form, the *3 end is a hydrogen atom and the *4 end is a hydroxy group.

[Formula 10]

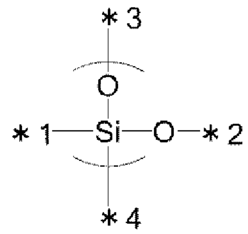

・・・(c31-1)

[Formula 11]

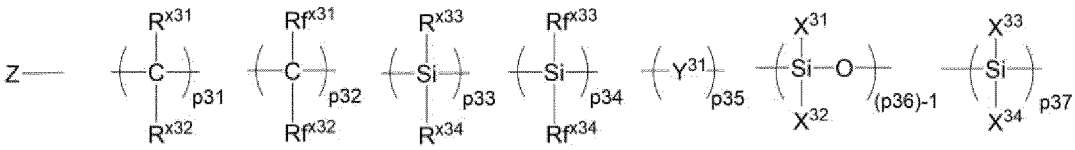

・・・(c31-2)

In the above formula (c31-2),

Z is a reactive functional group other than hydrolyzable and hydroxy groups; and
$R^{x31}$, $R^{x32}$, $R^{x33}$, $R^{x34}$, $Rf^{x31}$ $Rf^{x32}$ $Rf^{x33}$ $Rf^{x34}$ $Y^{31}$, $X^{31}$, $X^{32}$, $X^{33}$, $X^{34}$, and p31 to p37 have the same meaning as these signs in the above formula (c3).

In the case where the organosilicon compound (C3) is a compound represented by the above formula (c3-2), examples of the organosilicon compound (C3') include a compound in which structures represented by the following formula (c31-3) are bonded to each other in a chain or ring form via *3 or *4 below. In the case where the structures represented by the following formula (c31-3) are bonded in a chain form, the *3 end is a hydrogen atom and the *4 end is a hydroxy group.

[Formula 12]

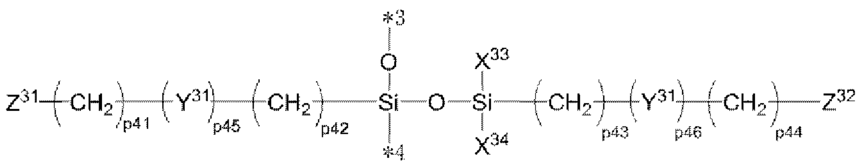

・・・(c31-3)

The signs in the above formula (c31-3) all have the same meaning as the signs in the above formula (c3-2).
It is preferable that the organosilicon compound (C3') be a compound in which 2 to 10 (preferably 3 to 8) structures represented by the above formula (c31-3) are bonded.
As the organosilicon compound (C), only one type may be used, or two or more types may be used. As the organosilicon compound (C), it is preferable to use at least the organosilicon compound (C1) and/or the organosilicon compound (C2).
When the entire composition of the present invention is set to 100% by mass, the total amount of the organosilicon compound (C) is preferably 0.005% by mass or more, more preferably 0.01% by mass or more, still more preferably 0.02% by mass or more, further preferably 0.1% by mass or more, and still further preferably 0.2% by mass or more, and it is also preferably 5% by mass or less, more preferably 3% by mass or less, and still more preferably 2% by mass or less. The amount of the above organosilicon compound (C) can be adjusted at the time of preparation of the composition. The amount of the organosilicon compound (C) may be calculated from the analytical results of the composition. As for the method of identifying from the analytical results of the composition, for example, the type of each compound contained

in the composition can be identified by analyzing the composition by gas chromatography-mass spectrometry, liquid chromatography-mass spectrometry, or other methods and searching the obtained analytical results in libraries, and the amount of each compound contained in the composition can also be calculated from the above analytical results by using the calibration curve method. Note that, in the case where the range of amount or mass ratio of each component is described in the present specification, such a range can be adjusted at the time of preparation of the composition.

2. Solvent 1

The Hansen solubility parameters are expressed in a three dimensional space by dividing the solubility parameter introduced by Hildebrand into three components: dispersion term (δD), polarity term (δP), and hydrogen bond term (δH). The dispersion term (δD) indicates the effect by dispersion force, the polarity term (δP) indicates the effect by dipole-to-dipole force, and the hydrogen bond term (δH) indicates the effect by hydrogen bond force.

Note that the definition and calculation of the Hansen solubility parameters are described in Hansen Solubility Parameters: A Users Handbook authored by Charles M. Hansen (CRC Press, 2007). In addition, by using the computer software Hansen Solubility Parameters in Practice (HSPiP), the Hansen solubility parameters can also be conveniently estimated from the chemical structure of compounds for which literature values are not known. Furthermore, as for compounds for which literature values are not known, the Hansen solubility parameters can also be calculated by using the solubility sphere method, which will be described later. In the present invention, when determining the Hansen solubility parameters of solvents, the values of registered Hansen solubility parameters are used for solvents registered in the database using the HSPiP version 5.2.05, and the Hansen solubility parameters for solvents not registered are calculated by using the solubility sphere method, which will be described below.

The solubility sphere method is a method of calculating the Hansen solubility parameters of an object, which can be determined by a solubility test in which the object is dissolved or dispersed in a number of different solvents for which the Hansen solubility parameters are established to evaluate the solubility or dispersibility of the object in a particular solvent. It is preferable to select the types of solvents used in the solubility test such that the total value of the dispersion term, polarity term, and hydrogen bond term of the HSP of each solvent varies widely among the solvents, and more specifically, it is preferable to perform the evaluation using preferably 10 or more types, more preferably 15 or more types, and still more preferably 17 or more types of solvents. Specifically, among the solvents used in the above solubility test, a sphere with the smallest radius (solubility sphere) is found, in which all the three dimensional points of solvents that dissolve or disperse the object are inside the sphere and the points of solvents that do not dissolve or disperse the object are outside the sphere, and the center coordinates of the sphere are used as the Hansen solubility parameters of the object. The evaluation of solubility and dispersibility is carried out by visually judging whether the target object is dissolved or not and dispersed or not in the solvent, respectively. In the case where a mixture of the object and the solvent becomes clouded, the object is precipitated, or the object and the solvent are separated in layers, it is sufficient to consider that the target object is not dissolved or not dispersed in the solvent. The specific method of the solubility test is described in detail in the Examples section.

For example, in the case where the Hansen solubility parameters of another solvent not used for measuring the Hansen solubility parameters of the object are (δd,δp,δh), the solvent is considered to dissolve or disperse the object if the point indicated by its coordinates is enclosed inside the solubility sphere of the object. On the other hand, if its coordinate point is outside the solubility sphere of the object, that solvent is considered incapable of dissolving or dispersing the object.

In the present invention, when the ratio of the hydrogen bond term (δH) to the dispersion term (δD) in the Hansen solubility parameters of a solvent is defined as δH/δD, a compound with a ratio (δH/δD) of less than 0.410 is referred to as the solvent 1. When the composition of the present invention contains the solvent 1, the coatability becomes good and the appearance when made into a laminated body becomes good. Note that, in the present specification, the term "solvent" refers to a compound that is liquid at room temperature.

The solvent 1 may be either a single solvent composed of a compound with a ratio (δH/δD) of less than 0.410, or a solvent mixture composed of two or more compounds each with a ratio (δH/δD) of less than 0.410. The ratio (δH/δD) of a compound contained in the solvent 1 is preferably 0.400 or less, and it may also be 0.10 or more, preferably 0.20 or more, and more preferably 0.30 or more.

Specific examples of the solvent 1 include an ester solvent 1-A such as butyl acetate and butyl benzoate; a ketone solvent 1-A such as methyl ethyl ketone, methyl isobutyl ketone, cyclopentanone, and cyclohexanone; an ether solvent 1-A such as diethyl ether; a hydrocarbon solvent 1-A such as benzene, toluene, xylene, pentane, hexane, and cyclohexane; and other solvents, and among the above, the ester solvent 1-A is preferred and butyl acetate is particularly preferred. Note that the ester solvent 1-A, the ketone solvent 1-A, the ether solvent 1-A, and the hydrocarbon solvent 1-A refer to an ester solvent, a ketone solvent, an ether solvent, and a hydrocarbon solvent with a ratio (δH/δD) of less than 0.410, respectively.

From the viewpoint of coatability, the amount of the solvent 1 is preferably 25% by mass or more, more preferably

50% by mass or more, still more preferably 80% by mass or more, even more preferably 90% by mass or more, and further preferably 98% by mass or more, and it may also be 99.9% by mass or less in 100% by mass of the composition of the present invention.

The content of the solvent 1 relative to 1 part by mass of the organosilicon compound (C) is, from the viewpoint of achieving good coatability, preferably 20 parts by mass or more, more preferably 50 parts by mass or more, still more preferably 100 parts by mass or more, even more preferably 150 parts by mass or more, and particularly preferably 300 parts by mass or more, and also from the viewpoint of further improving the storage stability of the composition, it is preferably 20000 parts by mass or less, more preferably 10000 parts by mass or less, even further preferably 1000 parts by mass or less, still more preferably 600 parts by mass or less, and particularly preferably 500 parts by mass or less.

3. Solvent 2

The solvent 2 is a solvent composed of a compound with the above-mentioned ratio (δH/δD) of 0.410 or more. When the composition of the present invention contains the solvent 2 together with the solvent 1, a composition with good storage stability can be obtained, and preferably a composition with good storage stability and good coatability can be obtained. As mentioned above, in the preferred aspect, a hydrolyzable group or a hydroxy group is bonded to a silicon atom of the organosilicon compound (C), and during storage of the composition, a condensation reaction between -SiOH groups that the organosilicon compound (C) has or -SiOH groups of the organosilicon compound (C) generated by hydrolysis of hydrolyzable groups bonded to silicon atoms progresses, which is believed to be one factor that reduces the storage stability of the composition. However, since the composition of the present invention contains the solvent 2 together with the solvent 1, such a condensation reaction and the like can be suppressed, presumably contributing to an improvement in the storage stability of the composition. The storage stability of the composition can be evaluated by, for example, preparing the composition and then measuring the number of days until it becomes clouded. For example, when the composition of the present invention is placed in an atmosphere with a temperature of 22°C and a relative humidity of 55%, the number of days until cloudiness is observed is, for example, 2 days or longer, preferably 5 days or longer, more preferably 8 days or longer, and still more preferably 10 days or longer, and it is also 200 days or shorter, for example.

The solvent 2 may be either a single solvent composed of a compound with a ratio (δH/δD) of 0.410 or more, or a solvent mixture composed of two or more compounds each with a ratio (δH/δD) of 0.410 or more. The ratio (δH/δD) of a compound contained in the solvent 2 is preferably 0.430 or more, and it may also be 1.8 or less, preferably 1.5 or less, and more preferably 1.3 or less.

Specific examples of the solvent 2 include a non-fluorinated alcohol solvent 2-A such as methanol, ethanol, 1-propanol, isopropanol, 1-butanol, 2-butanol, isobutyl alcohol, isopentyl alcohol, n-amyl alcohol, diacetone alcohol, and benzyl alcohol; a fluorine-containing alcohol solvent 2-A such as 2,2,3,3,4,4,5,5,6,6,7,7-dodecafluoro-1-heptanol, perfluorooctylethanol, 1,1,3,3,3-hexafluoro-2-propanol, 2,2,3,3-tetrafluoro-1-propanol, 2,2,3,3,4,4,5,5-octafluoro-1-pentanol, 2,2,3,3,4,4,5,5,6,6,7,7,8,8,9,9-hexadecafluoro-1-nonaol, 1H,1H,2H,2H-tridecafluoro-1-n-octanol, and 1H,1H,2H,2H-nonafluoro-1-hexanol; a ketone solvent 2-A such as acetone; an ether solvent 2-A such as tetrahydrofuran; an ether alcohol solvent 2-A such as ethylene glycol monobutyl ether, propylene glycol monobutyl ether, and dipropylene glycol; an ether ester solvent 2-A such as propylene glycol monomethyl ether acetate and ethylene glycol monobutyl ether acetate; and other solvents. Note that, in the present specification, the non-fluorinated alcohol solvent 2-A, the fluorine-containing alcohol solvent 2-A, the ketone solvent 2-A, the ether solvent 2-A, the ether alcohol solvent 2-A, and the ether ester solvent 2-A refer to a non-fluorinated alcohol solvent, a fluorine-containing alcohol solvent, a ketone solvent, an ether solvent, an ether alcohol solvent, and an ether ester solvent with a ratio (δH/δD) of 0.410 or more, respectively. Also, in the present specification, the term "non-fluorinated alcohol solvent" refers to an alcohol solvent that has no fluorine atoms, and the term "fluorine-containing alcohol solvent" refers to an alcohol solvent that has one or more fluorine atoms. The ketone solvent does not include a solvent that has an alcoholic hydroxy group.

It is preferable that the solvent 2 contain a non-fluorinated alcohol solvent 2-A, or an organic solvent 2-B having a Hansen solubility parameter distance Ra of 5 $(J/cm^3)^{0.5}$ or less from the organosilicon compound (C), as calculated according to expression (E.1), and it may be a mixed solvent containing the non-fluorinated alcohol solvent 2-A and the organic solvent 2-B.

Among the non-fluorinated alcohol solvent 2-A, an alkyl alcohol such as methanol, ethanol, 1-propanol, isopropanol, 1-butanol, 2-butanol, and isobutyl alcohol, or a ketoalcohol having an alcoholic hydroxy group and a carbonyl group in the molecule such as diacetone alcohol is preferred, an alkyl alcohol having 1 to 3 carbon atoms or diacetone alcohol is more preferred, and ethanol or diacetone alcohol is particularly preferred.

From the viewpoint of improving the solubility of the organosilicon compound (C), the amount of the non-fluorinated alcohol solvent 2-A is preferably 0.01% by mass or more, and more preferably 0.03% by mass or more, and it is also preferably 5% by mass or less, more preferably 3% by mass or less, still more preferably 1% by mass or less, even more preferably 0.5% by mass or less, and particularly preferably 0.1% by mass or less in 100% by mass of the

composition of the present invention.

The organic solvent 2-B is an organic solvent composed of a compound having a Hansen solubility parameter distance Ra of 5 $(J/cm^3)^{0.5}$ or less from the organosilicon compound (C), as calculated according to expression (E.1).

[Expression 2]

$$Ra = \sqrt{4(\delta D1 - \delta D2)^2 + (\delta P1 - \delta P2)^2 + (\delta H1 - \delta H2)^2} \qquad (E.1)$$

[In the expression,

$\delta D1$ is a dispersion term $(J/cm^3)^{0.5}$ in Hansen solubility parameters of the organosilicon compound (C);
$\delta D2$ is a dispersion term $(J/cm^3)^{0.5}$ in Hansen solubility parameters of the organic solvent 2-B;
$\delta P1$ is a polarity term $(J/cm^3)^{0.5}$ in Hansen solubility parameters of the organosilicon compound (C);
$\delta P2$ is a polarity term $(J/cm^3)^{0.5}$ in Hansen solubility parameters of the organic solvent 2-B;
$\delta H1$ is a hydrogen bond term $(J/cm^3)^{0.5}$ in Hansen solubility parameters of the organosilicon compound (C); and
$\delta H2$ is a hydrogen bond term $(J/cm^3)^{0.5}$ in Hansen solubility parameters of the organic solvent 2-B]

The organic solvent 2-B is an organic solvent composed of a compound with the above-mentioned ratio ($\delta H/\delta D$) of 0.410 or more and having a distance Ra of 5 $(J/cm^3)^{0.5}$ or less as calculated according to the above expression (E.1). The organic solvent 2-B may be either a single solvent composed of a compound satisfying the above conditions, or a solvent mixture composed of two or more compounds each satisfying the above conditions.

From the viewpoint of improving the solubility of the organosilicon compound (C), the compound contained in the organic solvent 2-B preferably has a distance Ra as calculated according to the above expression (E.1) of 4.8 $(J/cm^3)^{0.5}$ or less, more preferably 4.0 $(J/cm^3)^{0.5}$ or less, and still more preferably 3.5 $(J/cm^3)^{0.5}$ or less, and it may also be 0.5 $(J/cm^3)^{0.5}$ or more, 1.0 $(J/cm^3)^{0.5}$ or more, or 2.0 $(J/cm^3)^{0.5}$ or more.

In expression (E.1), as the Hansen solubility parameters of the organosilicon compound (C), the values determined by the above-mentioned solubility sphere method can be used. Also, in the case where the organosilicon compound (C) is a mixture composed of two compounds, the Hansen solubility parameters of the organosilicon compound (C) can be calculated according to expression (E.2). The volume fraction may also be changed to the weight fraction as an approximation. Note that, in expression (E.2), one of the above two compounds is described as an organosilicon compound (Cc1) and the other compound is described as an organosilicon compound (Cc2) .

[Expression 3]

$$(\delta D1, \delta P1, \delta H1) = (x_I \delta D1^I + x_{II} \delta D1^{II}, x_I \delta P1^I + x_{II} \delta P1^{II}, x_I \delta H1^I + x_{II} \delta H1^{II}) \qquad (E.2)$$

[In the expression, $\delta D1$, $\delta P1$, and $\delta H1$ are the same as in expression (E.1).

$x_I$ is the volume fraction of the organosilicon compound (Cc1) in the organosilicon compound (C);
$x_{II}$ is the volume fraction of the organosilicon compound (Cc2) in the organosilicon compound (C);
($\delta D1^I$,$\delta P1^I$,$\delta H1^I$) are the Hansen solubility parameters for the organosilicon compound (Cc1); and
($\delta D1^{II}$,$\delta P1^{II}$,$\delta H1^{II}$) are the Hansen solubility parameters for the organosilicon compound (Cc2).]

Note that, even in the case where the organosilicon compound (C) is a mixture of three or more types, the Hansen solubility parameters for the organosilicon compound (C) can be calculated by performing calculations in the same manner.

Specific examples of the organic solvent 2-B can vary depending on the organosilicon compound (C), but as long as the compound has a distance Ra of 5 $(J/cm^3)^{0.5}$ or less as calculated according to the above expression (E.1), it may be a compound exemplified in the non-fluorinated alcohol solvent 2-A, the fluorine-containing alcohol solvent 2-A, the ketone solvent 2-A, the ether solvent 2-A, the ether alcohol solvent 2-A, and the ether ester solvent 2-A mentioned above. Note that, in the case where the solvent 2 contains the non-fluorinated alcohol solvent 2-A and the organic solvent 2-B, the organic solvent 2-B does not contain the non-fluorinated alcohol solvent 2-A.

The amount of the organic solvent 2-B is preferably 0.01% by mass or more, and more preferably 0.03% by mass or more, and it is also preferably 75% by mass or less, more preferably 20% by mass or less, still more preferably 5% by mass or less, even more preferably 3% by mass or less, even more preferably 1% by mass or less, and particularly preferably 0.5% by mass or less in 100% by mass of the composition of the present invention.

When the entire solvent 2 is set to 100% by mass, the total amount of the non-fluorinated alcohol solvent 2-A and the organic solvent 2-B is preferably 50% by mass or more, more preferably 80% by mass or more, still more

preferably 90% by mass or more, particularly preferably 98% by mass or more, and it may be 100% by mass.

In the case where the solvent 2 contains the non-fluorinated alcohol solvent 2-A and the organic solvent 2-B, the amount of the non-fluorinated alcohol solvent 2-A is preferably 1% by mass or more, more preferably 5% by mass or more, and still more preferably 10% by mass or more, and it is also preferably 50% by mass or less, more preferably 30% by mass or less, and still more preferably 20% by mass or less, in 100% by mass of the total of the non-fluorinated alcohol solvent 2-A and the organic solvent 2-B.

It is also preferable for the solvent 2 to contain at least the non-fluorinated alcohol solvent 2-A, the fluorine-containing alcohol solvent 2-A, or the ketone solvent 2-A, and it is more preferable for it to be the non-fluorinated alcohol solvent 2-A, the fluorine-containing alcohol solvent 2-A, the ketone solvent 2-A, or a mixture thereof.

In this case, the non-fluorinated alcohol solvent 2-A is preferably an alkyl alcohol such as methanol, ethanol, 1-propanol, isopropanol, 1-butanol, 2-butanol, and isobutyl alcohol, or a ketoalcohol such as diacetone alcohol, more preferably an alkyl alcohol having 1 to 3 carbon atoms or diacetone alcohol, and particularly preferably ethanol or diacetone alcohol.

In addition, the fluorine-containing alcohol solvent 2-A is preferably an alkyl alcohol having 2 to 10 carbon atoms in which two or more hydrogen atoms are replaced by fluorine atoms, more preferably an alkyl alcohol having 2 to 10 carbon atoms with a perfluoroalkylene structure in the molecule, and particularly preferably 2,2,3,3,4,4,5,5,6,6,7,7-dodecafluoro-1-heptanol.

In addition, the ketone solvent 2-A is preferably a ketone in which an alkyl group is bonded to each side of the carbonyl group, more preferably a ketone in which an alkyl group having 1 to 3 carbon atoms is bonded to each side of the carbonyl group, and particularly preferably acetone.

The amount of the non-fluorinated alcohol solvent 2-A is preferably 0.01% by mass or more, and more preferably 0.03% by mass or more, and it is also preferably 5% by mass or less, more preferably 1% by mass or less, and still more preferably 0.5% by mass or less in 100% by mass of the composition of the present invention. The amount of the non-fluorinated alcohol solvent 2-A may be 75% by mass or less, or may be 0.1% by mass or less, in 100% by mass of the composition of the present invention.

In addition, the amount of the fluorine-containing alcohol solvent 2-A is preferably 0.01% by mass or more, more preferably 0.03% by mass or more, still more preferably 0.10% by mass or more, and even more preferably 0.15% by mass or more, and it is also preferably 20% by mass or less, more preferably 5% by mass or less, still more preferably 1% by mass or less, and further preferably 0.5% by mass or less in 100% by mass of the composition of the present invention. The amount of the fluorine-containing alcohol solvent 2-A may be 75% by mass or less in 100% by mass of the composition of the present invention.

In addition, the amount of the ketone solvent 2-A is preferably 0.01% by mass or more, more preferably 0.03% by mass or more, still more preferably 0.10% by mass or more, and even more preferably 0.15% by mass or more, and it is also preferably 75% by mass or less in 100% by mass of the composition of the present invention. The amount of the ketone solvent 2-A may be 20% by mass or less, 5% by mass or less, 3% by mass or less, 1% by mass or less, or 0.5% by mass or less in 100% by mass of the composition of the present invention.

When the entire solvent 2 is set to 100% by mass, the total amount of the non-fluorinated alcohol solvent 2-A, the fluorine-containing alcohol solvent 2-A, and the ketone solvent 2-A is preferably 50% by mass or more, more preferably 80% by mass or more, still more preferably 90% by mass or more, particularly preferably 98% by mass or more, and it may be 100% by mass.

In the case where the solvent 2 is a mixed solvent containing two or more solvents selected from the group consisting of the non-fluorinated alcohol solvent 2-A, the fluorine-containing alcohol solvent 2-A, and the ketone solvent 2-A, it is preferable for it to be a mixed solvent containing the fluorine-containing alcohol solvent 2-A and the ketone solvent 2-A or a mixed solvent containing the non-fluorinated alcohol solvent 2-A and the ketone solvent 2-A.

In the case where the solvent 2 is a mixed solvent of the fluorine-containing alcohol solvent 2-A and the ketone solvent 2-A, the amount of the fluorine-containing alcohol solvent 2-A is preferably 1% by mass or more, more preferably 5% by mass or more, and still more preferably 10% by mass or more, and it is also preferably 50% by mass or less, more preferably 30% by mass or less, and still more preferably 20% by mass or less, in 100% by mass of the total of the fluorine-containing alcohol solvent 2-A and the ketone solvent 2-A. Also, in the case where the solvent 2 is a mixed solvent of the non-fluorinated alcohol solvent 2-A and the ketone solvent 2-A, the amount of the non-fluorinated alcohol solvent 2-A is preferably 1% by mass or more, more preferably 5% by mass or more, and still more preferably 10% by mass or more, and it is also preferably 50% by mass or less, more preferably 30% by mass or less, and still more preferably 20% by mass or less, in 100% by mass of the total of the non-fluorinated alcohol solvent 2-A and the ketone solvent 2-A.

When the entire composition of the present invention is set to 100% by mass, the amount of the solvent 2 is preferably 0.01% by mass or more, and more preferably 0.03% by mass or more, and it is also preferably 75% by mass or less. When the entire composition of the present invention is set to 100% by mass, the amount of the solvent 2 may be 20% by mass or less, may be 5% by mass or less, or may be 1% by mass or less.

The content of the solvent 2 relative to 1 part by mass of the organosilicon compound (C) is preferably 0.01 parts by mass or more, more preferably 0.05 parts by mass or more, and still more preferably 0.10 parts by mass or more, and it is also preferably 300 parts by mass or less. The content of the solvent 2 relative to 1 part by mass of the organosilicon compound (C) may be 20 parts by mass or less, may be 10 parts by mass or less, or may be 3 parts by mass or less.

When the entire composition of the present invention is set to 100% by mass, the total amount of the solvent 1 and the solvent 2 is preferably 80% by mass or more, more preferably 90% by mass or more, still more preferably 95% by mass or more, and further preferably 98% by mass or more, and it may also be 99.9% by mass or less.

The mass ratio of the solvent 2 to the solvent 1 is preferably 0.01% by mass or more, more preferably 0.05% by mass or more, and still more preferably 0.10% by mass or more, and it is also preferably 250% by mass or less. By adjusting the mass ratio between the solvent 1 and the solvent 2 to the above range, the storage stability of the composition can be made better and the appearance of the resulting laminated body can be made better. The mass ratio of the solvent 2 to the solvent 1 may be 100% by mass or less, may be 20% by mass or less, or may be 5% by mass or less. Also, by setting the mass ratio of the solvent 2 to the solvent 1 to 0.2% by mass or more and 250% by mass or less, preferably 2% by mass or more and 250% by mass or less, the storage stability of the composition can be made even better, and by setting the mass ratio of the solvent 2 to the solvent 1 to 0.1% by mass or less, preferably 0.05% by mass or less, the sliding angle of the resulting laminated body can be made smaller.

When the entire composition of the present invention is set to 100% by mass, the total amount of the organosilicon compound (C), the solvent 1, and the solvent 2 is preferably 90% by mass or more, more preferably 95% by mass or more, and still more preferably 98% by mass or more, and it may also be 100% by mass.

In the composition of the present invention, a variety of additives may be mixed in to the extent that the effects of the present invention are not inhibited, such as a silanol condensation catalyst, an antioxidant, a rust inhibitor, an ultraviolet absorber, a light stabilizer, a fungicide, an antibacterial agent, an antiviral agent, an anti-organism adhesion agent, a deodorant, a pigment, a flame retardant, and an antistatic agent. The amount of the additives is preferably 5% by mass or less, and more preferably 1% by mass or less, in 100% by mass of the mixed composition of the present invention.

The composition of the present invention can be used as a coating agent for an intermediate layer, which is between a substrate and a water repellent layer. The composition of the present invention (hereinafter, this may be referred to as a composition for intermediate layer formation) has excellent storage stability. Also, according to an aspect of the present invention, the physical properties (preferably, wear resistance) and/or appearance of a laminated body remain good even if the laminated body is obtained using the composition for intermediate layer formation immediately after preparation, or even if the laminated body is obtained using the composition for intermediate layer formation after being stored after preparation. Hereinafter, a laminated body including an intermediate layer formed from the composition for intermediate layer formation of the present invention will be described.

<Laminated body>

A laminated body of the present invention is a laminated body in which a substrate (s) and a water repellent layer (r) are laminated via an intermediate layer (c), characterized in that the intermediate layer (c) is a layer formed from the composition of the present invention. The laminated body of the present invention has good water repellency, preferably good water repellency and wear resistance.

1. Substrate (s)

The material of the substrate (s) is not particularly limited and may be either an organic material or an inorganic material, and the shape of the substrate may be either flat or curved, or may be a combination thereof. Examples of the organic material include a thermoplastic resin such as acrylic resin, acrylonitrile resin, polycarbonate resin, polyester resin (such as polyethylene terephthalate), styrene resin, cellulose resin, polyolefin resin, vinyl resin (such as polyethylene, polyvinyl chloride, vinylbenzyl chloride resin, and polyvinyl alcohol), polyvinylidene chloride resin, polyamide resin, polyimide resin, polyamideimide resin, polyetherimide resin, polyethersulfone resin, polysulfone resin, polyvinylalcohol resin, polyvinylacetal resin, and copolymer thereof; and a thermosetting resin such as phenolic resin, urea resin, melamine resin, epoxy resin, unsaturated polyester, silicone resin, and urethane resin. Examples of the inorganic material include a metal such as iron, silicon, copper, zinc, aluminum, titanium, zirconium, niobium, tantalum, and lanthanum, a metal oxide thereof, or an alloy containing these metals, a ceramic, and glass. Among the above, in particular, the organic material is preferred, at least one of acrylic resin, polyester resin, vinylbenzyl chloride resin, epoxy resin, silicone resin, and urethane resin is more preferred, acrylic resin and polyester resin are still more preferred, and polyethylene terephthalate is particularly preferred.

It is also preferable to disperse inorganic particles, organic particles, or rubber particles in the substrate (s),

and it may also contain a compounding agent such as a colorant like pigment or dye, a fluorescent brightening agent, a dispersing agent, a plasticizer, a thermal stabilizer, a light stabilizer, an infrared absorber, an ultraviolet absorber, an antistatic agent, an antioxidant, a lubricant, or a solvent.

The thickness of the substrate (s) is, for example, 5 μm or more, preferably 10 μm or more, more preferably 20 μm or more, and still more preferably 30 μm or more, and it may be 500 μm or less, preferably 200 μm or less, more preferably 150 μm or less, still more preferably 100 μm or less, and particularly preferably 60 μm or less.

2. Layer (X)

In the laminated body of the present invention, it is preferable that a layer (X) different from the substrate (s), the intermediate layer (c), and the water repellent layer (r) be provided between the substrate (s) and the intermediate layer (c). Examples of the layer (X) include a layer formed from at least one selected from a group (X1) consisting of an active energy ray curable resin and a thermosetting resin. The active energy ray is defined as an energy ray that can decompose an active species-generating compound to generate active species, and examples thereof may include visible light, ultraviolet rays, infrared rays, X-rays, α-rays, β-rays, γ-rays, and electron beams. Examples of the active energy ray curable resin include an ultraviolet ray curable resin such as acrylic resin, epoxy resin, oxetane resin, urethane resin, polyamide resin, vinylbenzyl chloride resin, vinyl resin (such as polyethylene and vinyl chloride resin), styrene resin, phenolic resin, vinyl ether resin or silicone resin, or a mixed resin thereof, and an electron beam curable resin, and in particular, an ultraviolet curable resin is preferred. As the group (X1), in particular, an acrylic resin, a silicone resin, a styrene resin, a vinyl chloride resin, a polyamide resin, a phenolic resin, and an epoxy resin are preferred. Examples of the layer (X) may also include a layer formed from at least one selected from a group (X2) consisting of titanium oxide, zirconium oxide, aluminum oxide, niobium oxide, tantalum oxide, lanthanum oxide, and $SiO_2$. The thickness of the layer (X) is, for example, 0.1 nm or more and 100 μm or less, preferably 1 nm or more and 60 μm or less, and more preferably 1 nm or more and 10 μm or less.

2-1. Hard coat layer (he)

In the case where the layer (X) has a layer formed from at least one selected from the group (X1), the layer (X) can function as a hard coat layer (hc) having surface hardness and can impart scratch resistance to the substrate (s). The hardness of the hard coat layer (hc) is usually B or higher in pencil hardness, preferably HB or higher, still more preferably H or higher, and especially preferably 2H or higher. In the case where the layer (X) includes the hard coat layer (hc), that is, in the case where the layer (X) has the function of a hard coat layer, the hard coat layer (he) may have a single layer structure or may have a multilayer structure. It is preferable for the hard coat layer (he) to contain, for example, the aforementioned ultraviolet ray curable resin, particularly preferable to contain an acrylic resin or a silicone resin, and preferable to contain an acrylic resin in order to express high hardness. In addition, it is also preferable to contain an epoxy resin, as the tendency is observed to have good close adhesion with the water repellent layer (r) via the intermediate layer (c) described above. Note that the specific method for forming the active energy ray curable resin and the thermosetting resin that constitute the group (X1) will be described in the display device section, which will be described later.

In the case where the layer (X) includes the hard coat layer (hc), the hard coat layer (hc) may contain an additive. The additive is not limited, and examples thereof include inorganic particulates, organic particulates, or a mixture thereof. Examples of the additive may include an ultraviolet absorber, a metal oxide such as silica or alumina, or an inorganic filler such as polyorganosiloxane. By containing the inorganic filler, the close adhesion with the above water repellent layer (r) via the above intermediate layer (c) can be improved. The thickness of the hard coat layer (hc) is, for example, 1 μm or more and 100 μm or less, preferably 3 μm or more and 50 μm or less, and more preferably 5 μm or more and 20 μm or less. In the case where the thickness of the hard coat layer (he) is 1 μm or more, sufficient scratch resistance can be ensured, and in the case where the thickness is 100 μm or less, bending resistance can be ensured and as a result, curl generation due to curing shrinkage can be suppressed.

2-2. Antireflection layer (ar)

In the case where the layer (X) has a layer formed from at least one selected from the group (X2), the layer (X) can function as an antireflection layer (ar) that prevents reflection of the incident light. In the case where the layer (X) includes the antireflection layer (ar), it is preferable that the antireflection layer (ar) be a layer that exhibits reflection characteristics where the reflectance is reduced to about 5.0% or less in the visible light region of 380 to 780 nm. It is preferable for the antireflection layer (ar) to include a layer formed from silica.

The structure of the antireflection layer (ar) is not particularly limited and it may be a single layer structure or may be a multilayer structure. In the case of a multilayer structure, a structure in which a low refractive index layer and

a high refractive index layer are alternately laminated is preferred, and it is preferable that the number of lamination be 2 to 20 in total. Examples of the material constituting the high refractive index layer include an oxide of titanium, zirconium, aluminum, niobium, tantalum, or lanthanum, while examples of the material constituting the low refractive index layer include silica. As the antireflection layer with a multilayer structure, a structure is preferred in which $SiO_2$ (silica) and $ZrO_2$, or $SiO_2$ and $Nb_2O_5$ are alternately laminated, and the outermost layer on the opposite side of the substrate (s) is $SiO_2$. The antireflection layer (ar) can be formed by, for example, the vapor deposition method. The thickness of the antireflection layer (ar) is, for example, 0.1 nm or more and 1000 nm or less.

It is preferable for the layer (X) to include at least the hard coat layer (hc), and it may include both the hard coat layer (hc) and the antireflection layer (ar). In the case where the layer (X) includes both the hard coat layer (hc) and the antireflection layer (ar), as for the laminated body of the present invention, it is preferable that the layers be laminated in the following order from the substrate side: substrate (s), hard coat layer (hc), antireflection layer (ar), intermediate layer (c), water repellent layer (r).

3. Intermediate layer (c)

The intermediate layer (c) is a layer formed from the composition for intermediate layer formation, and it is preferable that it be a cured layer of the composition for intermediate layer formation. The intermediate layer (c) has a structure derived from the organosilicon compound (C). As mentioned above, in the preferred aspect, a hydrolyzable group or a hydroxy group is bonded to a silicon atom of the organosilicon compound (C). Accordingly, -SiOH groups that the organosilicon compound (C) has or -SiOH groups of the organosilicon compound (C) generated by hydrolysis of hydrolyzable groups bonded to silicon atoms undergo dehydration condensation with -SiOH groups derived from the organosilicon compound (C) or active hydrogen (hydroxy groups or others) on the surface where the intermediate layer (c) is to be formed in the laminated body, and thus it is preferable for the intermediate layer (c) to have a condensed structure derived from the organosilicon compound (C). The intermediate layer (c) can function as a primer layer for the water repellent layer (r). The thickness of the intermediate layer (c) is, for example, 1 nm or more and 1000 nm or less.

4. Water repellent layer (r)

It is preferable that the water repellent layer (r) be a layer formed from a mixed composition of an organosilicon compound (A) (hereinafter, this may be referred to as a composition for water repellent layer formation), which will be described later, and it is more preferable that it be a cured layer of the composition for water repellent layer formation.

4-1. Organosilicon compound (A)

The organosilicon compound (A) includes a fluoropolyether structure. The fluoropolyether structure can also be referred to as a fluorooxyalkylene group, meaning a structure with oxygen atoms at both ends. The fluoropolyether structure has liquid repellency such as water repellency or oil repellency. It is preferable that the fluoropolyether structure be a perfluoropolyether structure. The number of carbon atoms contained in the longest linear moiety of the fluoropolyether structure is preferably 5 or more, for example, more preferably 10 or more, and even more preferably 20 or more. The upper limit of the number of carbon atoms is not particularly limited, and it is, for example, 200, preferably 150. The number of silicon atoms in one molecule of the organosilicon compound (A) is preferably 1 to 10, and more preferably 1 to 6.

It is preferable that the organosilicon compound (A) contain, in addition to the fluoropolyether structure and silicon atoms, a hydrolyzable group or a hydroxy group (hereinafter, both of which are collectively referred to as a reactive group (h3)), and it is more preferable that the reactive group (h3) be bonded to the silicon atom via a linking group or without a linking group. The reactive group (h3) has the action of being bonded through hydrolysis and dehydration condensation reactions together with the organosilicon compounds (A); the organosilicon compound (A) and another monomer; or the organosilicon compound (A) and the active hydrogen (hydroxy group or others) on the surface to which the composition for water repellent layer formation is to be applied, through condensation reaction. Examples of the hydrolyzable group include an alkoxy group, a halogen atom, a cyano group, an acetoxy group, and an isocyanate group. It is preferable that the reactive group (h3) be an alkoxy group or a halogen atom, it is more preferable that it be an alkoxy group having 1 to 4 carbon atoms or a chlorine atom, and it is particularly preferable that it be a methoxy group or an ethoxy group.

In an aspect where the organosilicon compound (A) contains the fluoropolyether structure, silicon atoms, and the reactive group (h3), it is preferable that a monovalent group having an oxygen atom of the fluoropolyether structure at the end of the bonding hand side (hereinafter, referred to as a FPE group) be bonded to a silicon atom via a linking group or without a linking group, and that a silicon atom be bonded to the reactive group (h3) via a linking group or without a linking group. In the case where the FPE group and a silicon atom are bonded via a linking group, one or a plurality of silicon atoms to which the reactive group (h3) is bonded via a linking group or without a linking group may

be present in one molecule of the organosilicon compound (A), and the number thereof is, for example, 1 or more and 10 or less.

The FPE group may be linear or may have a side chain, and it is preferable to have a side chain. As an aspect of having a side chain, in particular, it is preferable that the fluoropolyether structure in the FPE group have a side chain. It is preferable to have a fluoroalkyl group as a side chain, and the fluoroalkyl group is more preferably a perfluoroalkyl group, and still more preferably a trifluoromethyl group. The number of carbon atoms in the linking group that links the FPE group to a silicon atom is, for example, 1 or more and 20 or less, preferably 2 or more and 15 or less. It is preferable that the aforementioned FPE group be a group in which a fluorine-containing group having a fluoroalkyl group at the end and a perfluoropolyether structure are directly bonded. The fluorine-containing group may be a fluoroalkyl group or may be a fluoroalkyl group to which a linking group such as a divalent aromatic hydrocarbon group is bonded, but it is preferable that it be a fluoroalkyl group. It is preferable that the fluoroalkyl group be a perfluoroalkyl group, and it is more preferable that it be a perfluoroalkyl group having 1 to 20 carbon atoms.

Examples of the fluorine-containing group include $CF_3(CF_2)_p$- (p is 1 to 19, for example, and preferably 1 to 10), $CF_3(CF_2)_m$-$(CH_2)_n$- and $CF_3(CF_2)_m$-$C_6H_4$- (in both cases, m is 1 to 10, preferably 3 to 7, and in both cases, n is 1 to 5, preferably 2 to 4), and $CF_3(CF_2)_p$- or $CF_3(CF_2)_m$-$(CH_2)_n$- is preferred.

The reactive group (h3) may be bonded to a silicon atom via a linking group, or may be directly bonded to a silicon atom without a linking group, and it is preferable that it be directly bonded to a silicon atom. The number of reactive groups (h3) bonded to one silicon atom may be one or more, may be 2 or 3, but 2 or 3 is preferred, and 3 is particularly preferred. In the case where two or more reactive groups (h3) are bonded to a silicon atom, different reactive groups (h3) may be bonded to the silicon atom, but it is preferable that the same reactive groups (h3) be bonded to the silicon atom. In the case where the number of reactive groups (h3) bonded to one silicon atom is 2 or less, a monovalent group other than the reactive group (h3) may be bonded to the remaining bonding hand, and for example, an alkyl group (in particular, an alkyl group having 1 to 4 carbon atoms), H, NCO, and others can be bonded.

It is preferable that the organosilicon compound (A) be a compound represented by the following formula (a1).

[Formula 13]

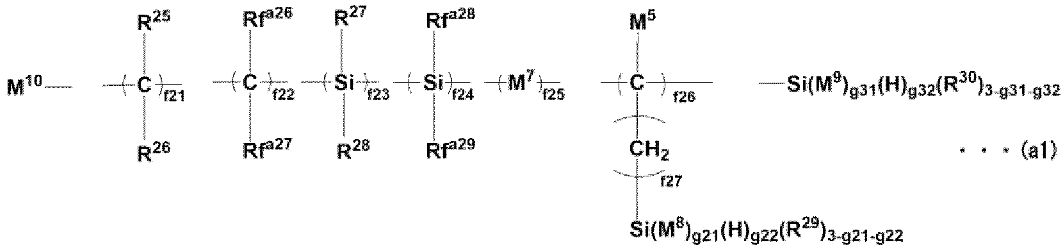

· · · (a1)

In the above formula (a1),

$Rf^{a26}$, $Rf^{a27}$, $Rf^{a28}$, and $Rf^{a29}$ are each independently a fluorinated alkyl group having 1 to 20 carbon atoms in which one or more hydrogen atoms are replaced by fluorine atoms, or a fluorine atom, and when there is a plurality of $Rf^{a26}$, the plurality of $Rf^{a26}$ is optionally different from each other, when there is a plurality of $Rf^{a27}$, the plurality of $Rf^{a27}$ is optionally different from each other, when there is a plurality of $Rf^{a28}$, the plurality of $Rf^{a28}$ is optionally different from each other, and when there is a plurality of $Rf^{a29}$, the plurality of $Rf^{a29}$ is optionally different from each other;

$R^{25}$ and $R^{26}$ are each independently a hydrogen atom, a halogen atom, an alkyl group having 1 to 4 carbon atoms, or a halogenated alkyl group having 1 to 4 carbon atoms in which one or more hydrogen atoms are replaced by halogen atoms, at least one of $R^{25}$ and $R^{26}$ bonded to one carbon atom is a hydrogen atom, and when there is a plurality of $R^{25}$, the plurality of $R^{25}$ is optionally different from each other, and when there is a plurality of $R^{26}$, the plurality of $R^{26}$ is optionally different from each other;

$R^{27}$ and $R^{28}$ are each independently a hydrogen atom, an alkyl group having 1 to 4 carbon atoms, or a single bond, and when there is a plurality of $R^{27}$, the plurality of $R^{27}$ is optionally different from each other and when there is a plurality of $R^{28}$, the plurality of $R^{28}$ is optionally different from each other;

$R^{29}$ and $R^{30}$ are each independently an alkyl group having 1 to 20 carbon atoms, and when there is a plurality of $R^{29}$, the plurality of $R^{29}$ is optionally different from each other and when there is a plurality of $R^{30}$, the plurality of $R^{30}$ is optionally different from each other;

$M^7$ is -O-, -C(=O)-O-, -O-C(=O)-, -NR-, -NRC(=O)-, - C(=O)NR-, -CH=CH-, or -$C_6H_4$- (phenylene group), where R is a hydrogen atom, an alkyl group having 1 to 4 carbon atoms, or a fluorine-containing alkyl group having 1 to 4 carbon atoms, and when there is a plurality of $M^7$, the plurality of $M^7$ is optionally different from each other;

$M^5$ is a hydrogen atom, a fluorine atom, or an alkyl group having 1 to 4 carbon atoms, and when there is a plurality of $M^5$, the plurality of $M^5$ is optionally different from each other;
$M^{10}$ is a hydrogen atom or a halogen atom;
$M^8$ and $M^9$ are each independently a hydrolyzable group, a hydroxy group, or $-(CH_2)_{e7}-Si(OR^{14})_3$, where e7 is 1 to 5 and $R^{14}$ is a methyl group or an ethyl group, and when there is a plurality of $M^8$, the plurality of $M^8$ is optionally different from each other and when there is a plurality of $M^9$, the plurality of $M^9$ is optionally different from each other;
f21, f22, f23, f24, and f25 are each independently an integer of 0 to 600, and the total value of f21, f22, f23, f24, and f25 is 13 or more;
f26 is an integer of 0 to 20;
f27 is each independently an integer of 0 to 2;
g21 is an integer of 1 to 3, g22 is an integer of 0 to 2, and $g21 + g22 \leq 3$;
g31 is an integer of 1 to 3, g32 is an integer of 0 to 2, and $g31 + g32 \leq 3$; and
as for $M^{10}$-, $-Si(M^9)_{g31}(H)_{g32}(R^{30})_{3-g31-g32}$, f21 - $\{C(R^{25})(R^{26})\}$- units ($U_{a1}$), f22 -$\{C(Rf^{a26})(Rf^{a27})\}$- units ($U_{a2}$), f23 -$\{Si(R^{27})(R^{28})\}$ - units ($U_{a3}$), f24 - $\{Si(Rf^{a28})(Rf^{a29})\}$- units ($U_{a4}$), f25 -$M^7$- units ($U_{a5}$), and f26 -$[C(M^5)\{(CH_2)_{f27}-Si(M^8)_{g21}(H)_{g22}(R^{29})_{3-g21-g22}\}]$ - units ($U_{a6}$), each unit is arranged and bonded in any order as long as $M^{10}$- is one end in formula (a1), $-Si(M^9)_{g31}(H)_{g32}(R^{30})_{3-g31-g32}$ is the other end, they are arranged in an order that at least partially forms the fluoropolyether structure, and -O- is not consecutive to -O-. Being arranged and bonded in any order means that it is not limited to the meaning that each repeating unit is consecutively arranged in the same order as described in the above formula (a1), and also means that f21 units ($U_{a1}$) are not necessarily consecutively bonded, but may be bonded via other units in the middle so that there are f21 units in total. The same applies to units ($U_{a2}$) to ($U_{a6}$) bracketed by f22 to f26, respectively.

In addition, in the case where at least one of $R^{27}$ and $R^{28}$ is a single bond, the single bond moiety of a unit bracketed by f23 and -O- in $M^7$ can be repeatedly bonded to form branched or cyclic siloxane bonds.
It is preferable that $Rf^{a26}$, $Rf^{a27}$, $Rf^{a28}$, and $Rf^{a29}$ be preferably each independently a fluorine atom or a fluorinated alkyl group having 1 to 2 carbon atoms in which one or more hydrogen atoms are replaced by fluorine atoms, and it is more preferable that they be each a fluorine atom or a fluorinated alkyl group having 1 to 2 carbon atoms in which all hydrogen atoms are replaced by fluorine atoms.
$R^{25}$ and $R^{26}$ are preferably each independently a hydrogen atom or a fluorine atom, and at least one of $R^{25}$ and $R^{26}$ bonded to one carbon atom is a hydrogen atom, and more preferably they are both hydrogen atoms.
$R^{27}$ and $R^{28}$ are preferably each independently a hydrogen atom or an alkyl group having 1 to 2 carbon atoms, and more preferably they are all hydrogen atoms.
$R^{29}$ are $R^{30}$ are each preferably an alkyl group having 1 to 5 carbon atoms, and more preferably an alkyl group having 1 to 2 carbon atoms.
$M^7$ is preferably -C(=O)-O-, -O-, or -O-C(=O)-, and more preferably all -O-.
$M^5$ is preferably a hydrogen atom or an alkyl group having 1 to 2 carbon atoms, and more preferably all hydrogen atoms.
$M^{10}$ is preferably a fluorine atom.
$M^8$ and $M^9$ are preferably each independently an alkoxy group or a halogen atom, more preferably a methoxy group, an ethoxy group, or a chlorine atom, and particularly preferably a methoxy group or an ethoxy group.
Preferably, f21, f23, and f24 are each 1/2 of f22 or less, more preferably 1/4 or less, still more preferably f23 or f24 is 0, and particularly preferably f23 and f24 are 0.
f25 is preferably 1/5 or more of the total value of f21, f22, f23, and f24, and not more than the total value of f21, f22, f23, and f24.
f21 is preferably 0 to 20, more preferably 0 to 15, still more preferably 1 to 15, and particularly preferably 2 to 10. f22 is preferably 5 to 600, more preferably 8 to 600, still more preferably 20 to 200, further preferably 30 to 200, still further preferably 35 to 180, and most preferably 40 to 180. f23 and f24 are each preferably 0 to 5, more preferably 0 to 3, and still more preferably 0. f25 is preferably 4 to 600, more preferably 4 to 200, still more preferably 10 to 200, and further preferably 30 to 60. The total value of f21, f22, f23, f24, and f25 is preferably 20 to 600, more preferably 20 to 250, and still more preferably 50 to 230. f26 is preferably 0 to 18, more preferably 0 to 15, still more preferably 0 to 10, and further preferably 0 to 5. f27 is preferably 0 to 1, and more preferably 0. g21 and g31 are each independently preferably 2 to 3, and more preferably 3. g22 and g32 are each independently preferably 0 or 1, and more preferably 0. It is preferable that g21 + g22 and g31 + g32 be each 3.
It is preferable to use as the organosilicon compound (A) a compound (a11) in which $R^{25}$ and $R^{26}$ are both hydrogen atoms; $Rf^{a26}$ and $Rf^{a27}$ are each a fluorine atom or a fluorinated alkyl group having 1 to 2 carbon atoms in which all hydrogen atoms are replaced by fluorine atoms; $M^7$ is all -O-; $M^8$ and $M^9$ are all methoxy groups, ethoxy groups, or chlorine atoms (in particular, methoxy groups or ethoxy groups); $M^5$ is a hydrogen atom; $M^{10}$ is a fluorine atom; f21 is 1 to 10 (preferably 2 to 7); f22 is 30 to 200 (more preferably 40 to 180); f23 and f24 are each 0; f25 is 30 to 60; f26 is

0 to 6; f27 is 0 to 1 (particularly preferably 0); g21 and g31 are each 1 to 3 (both preferably 2 or more, and more preferably 3); g22 and g32 are each 0 to 2 (both preferably 0 or 1, and more preferably 0); and g21 + g22 and g31 + g32 are each 3 in the above formula (a1).

It is preferable that the organosilicon compound (A) be represented by the following formula (a2).

[Formula 14]

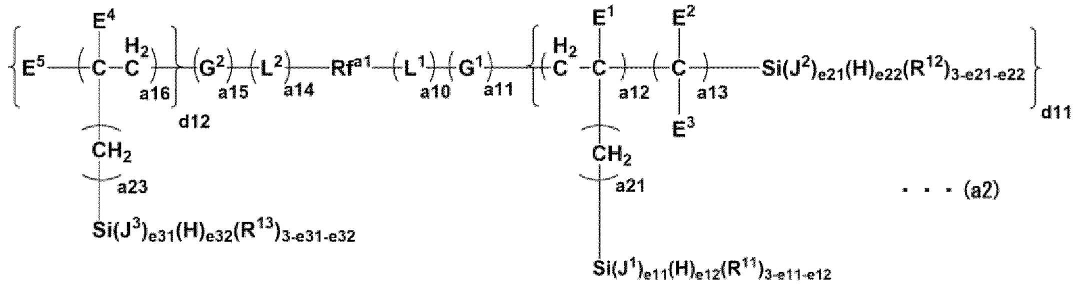

· · · (a2)

In the above formula (a2),

$Rf^{a1}$ is a divalent fluoropolyether structure with oxygen atoms at both ends;

$R^{11}$, $R^{12}$, and $R^{13}$ are each independently an alkyl group having 1 to 20 carbon atoms, and when there is a plurality of $R^{11}$, the plurality of $R^{11}$ is optionally different from each other, when there is a plurality of $R^{12}$, the plurality of $R^{12}$ is optionally different from each other, and when there is a plurality of $R^{13}$, the plurality of $R^{13}$ is optionally different from each other;

$E^1$, $E^2$, $E^3$, $E^4$, and $E^5$ are each independently a hydrogen atom or a fluorine atom, and when there is a plurality of $E^1$, the plurality of $E^1$ is optionally different from each other, when there is a plurality of $E^2$, the plurality of $E^2$ is optionally different from each other, when there is a plurality of $E^3$, the plurality of $E^3$ is optionally different from each other, when there is a plurality of $E^4$, the plurality of $E^4$ is optionally different from each other, and when there is a plurality of $E^5$, the plurality of $E^5$ is optionally different from each other;

$G^1$ and $G^2$ are each independently a divalent to 10-valent organosiloxane group having a siloxane bond;

$J^1$, $J^2$, and $J^3$ are each independently a hydrolyzable group, a hydroxy group, or $-(CH_2)_{e7}-Si(OR^{14})_3$, where e7 is 1 to 5, $R^{14}$ is a methyl group or an ethyl group, and when there is a plurality of $J^1$, the plurality of $J^1$ is optionally different from each other, where there is a plurality of $J^2$, the plurality of $J^2$ is optionally different from each other, and where there is a plurality of $J^3$, the plurality of $J^3$ is optionally different from each other;

$L^1$ and $L^2$ are each independently a divalent linking group having 1 to 12 carbon atoms and optionally containing an oxygen atom, a nitrogen atom, a silicon atom, or a fluorine atom, in which one or more of $-\{C(R^{25})(R^{26})\}-$ units ($U_{a1}$), $-\{C(Rf^{a26})(Rf^{a27})\}-$units ($U_{a2}$), $-\{Si(R^{27})(R^{28})\}-$ units ($U_{a3}$), or $-M^7-$ units ($U_{a5}$) are arranged and bonded in any order ($R^{25}$, $R^{26}$, $R^{27}$, $R^{28}$, $Rf^{a26}$, $Rf^{a27}$, and $M^7$ are the same as in the above formula (a1));

a10 and a14 are each independently 0 or 1;

a11 and a15 are each independently 0 or 1;

a12 and a16 are each independently 0 to 9;

a13 is 0 to 4;

when a11 is 0 or when a11 is 1 and $G^1$ is divalent, then d11 is 1, and when a11 is 1 and $G^1$ is trivalent to 10-valent, then d11 is a number that is one less than the valence of $G^1$;

when a15 is 0 or when a15 is 1 and $G^2$ is divalent, then d12 is 1, and when a15 is 1 and $G^2$ is trivalent to 10-valent, then d12 is a number that is one less than the valence of $G^2$;

a21 and a23 are each independently 0 to 2;

e11 is 1 to 3, e12 is 0 to 2, and $e11 + e12 \leq 3$;

e21 is 1 to 3, e22 is 0 to 2, and $e21 + e22 \leq 3$; and

e31 is 1 to 3, e32 is 0 to 2, and $e31 + e32 \leq 3$.

Note that a10 being 0 means that the moiety bracketed with a10 is a single bond, and the same applies when a11, a12, a13, a14, a15, a16, a21, or a23 is 0.

$Rf^{a1}$ is preferably $-O-(CF_2CF_2O)_{e4}-$, $-O-(CF_2CF_2CF_2O)_{e5}-$, or $-O-(CF_2-CF(CF_3)O)_{e6}-$. e4 and e5 are both 15 to 80, and e6 is 3 to 60. In addition, it is also preferable that $Rf^{a1}$ be a remaining group formed by removing hydrogen atoms from the hydroxy groups at both ends of a structure in which p moles of perfluoropropylene glycol and q moles of perfluoromethanediol are randomly dehydrated and condensed, where p + q is 15 to 80, and this aspect is most

preferable as $Rf^{a1}$.

$R^{11}$, $R^{12}$, and $R^{13}$ are each independently preferably an alkyl group having 1 to 10 carbon atoms, and more preferably an alkyl group having 1 to 2 carbon atoms.

It is preferable that $E^1$, $E^2$, $E^3$, and $E^4$ be all hydrogen atoms, and it is preferable that $E^5$ be a fluorine atom.

$L^1$ and $L^2$ are each independently preferably a divalent linking group having 1 to 12 (preferably 1 to 10, and more preferably 1 to 5) carbon atoms and containing a fluorine atom, in which one or more of -{C($R^{25}$)($R^{26}$)}-units ($U_{a1}$) or -{C($Rf^{a26}$)($Rf^{a27}$)}- units ($U_{a2}$) are arranged and bonded in any order, and more preferably $-(CF_2)_x-$, where x is 1 to 12 (preferably 1 to 10, and more preferably 1 to 5).

$G^1$ and $G^2$ are each independently preferably a divalent to pentavalent organosiloxane group having a siloxane bond.

$J^1$, $J^2$, and $J^3$ are each independently preferably a methoxy group, an ethoxy group, or - $(CH_2)_{e7}$-Si($OR^{14}$)$_3$, and more preferably a methoxy group or an ethoxy group.

a10 is preferably 1, a11 is preferably 0, a12 is preferably 0 to 7 and more preferably 0 to 5, a13 is preferably 1 to 3, a14 is preferably 1, a15 is preferably 0, a16 is preferably 0 to 6 and more preferably 0 to 3, a21 and a23 are both preferably 0 or 1 (more preferably both 0), d11 is preferably 1, d12 is preferably 1, e11, e21 and e31 are all preferably 2 or more, also preferably 3. e12, e22, and e32 are all preferably 0 or 1, and more preferably 0. It is preferable that e11 + e12, e21 + e22, and e31 + e32 be all 3. These preferred ranges may be satisfied alone, or two or more of them may be satisfied in combination.

It is preferable to use as the organosilicon compound (A) a compound (a21) in which $Rf^{a1}$ is a remaining group formed by removing hydrogen atoms from the hydroxy groups at both ends of a structure in which p moles of perfluoropropylene glycol and q moles of perfluoromethanediol are randomly dehydrated and condensed, where p + q is 15 to 80; $L^1$ and $L^2$ are both perfluoroalkylene groups having 1 to 5 (preferably 1 to 3) carbon atoms; $E^1$, $E^2$, and $E^3$ are all hydrogen atoms; $E^4$ is a hydrogen atom; $E^5$ is a fluorine atom; $J^1$, $J^2$, and $J^3$ are all methoxy groups or ethoxy groups (in particular, methoxy groups); a10 is 1; a11 is 0; a12 is 0 to 7 (preferably 0 to 5); a13 is 2; a14 is 1; a15 is 0; a16 is 0 to 6 (in particular, 0); a21 and a23 are each independently 0 or 1 (more preferably, a21 and a23 are both 0); d11 is 1; d12 is 1; e11, e21, and e31 are all 2 to 3 (in particular, 3); e12, e22, and e32 are all 0 or 1 (in particular, 0); and e11 + e12, e21 + e22, and e31 + e32 are all 3 in the above formula (a2).

It is also preferable to use as the organosilicon compound (A) a compound (a22) in which $Rf^{a1}$ is $-O-(CF_2CF_2CF_2O)_{e5}-$; e5 is 15 to 80 (preferably 25 to 40); $L^1$ is a divalent linking group having 3 to 6 carbon atoms and containing a fluorine atom and an oxygen atom; $L^2$ is a perfluoroalkylene group having 2 to 10 carbon atoms; $E^2$ and $E^3$ are both hydrogen atoms; $E^5$ is a fluorine atom; $J^2$ is - $(CH_2)_{e7}$-Si($OCH_3$)$_3$; e7 is 2 to 4; a10 is 1; a11 is 0; a12 is 0; a13 is 2; a14 is 1; a15 is 0; a16 is 0; d11 is 1; d12 is 1; and e21 is 3 in the above formula (a2).

More specifically, examples of the organosilicon compounds (A) include a compound of the following formula (a3) .

[Formula 15]

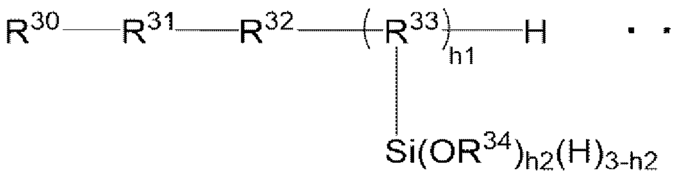

(a3)

In the above formula (a3), $R^{30}$ is a perfluoroalkyl group having 1 to 6 carbon atoms; $R^{31}$ is a remaining group formed by removing hydrogen atoms from the hydroxy groups at both ends of a structure in which p moles of perfluoropropylene glycol and q moles of perfluoromethanediol are randomly dehydrated and condensed, where p + q is 15 to 80, or a remaining group formed by removing hydrogen atoms from the hydroxy groups at both ends of a perfluorooxyalkylene glycol having 15 to 240 carbon atoms (the former group is more preferred as $R^{31}$); $R^{32}$ is a perfluoroalkylene group having 1 to 10 carbon atoms; $R^{33}$ is a trivalent saturated hydrocarbon group having 2 to 6 carbon atoms; and $R^{34}$ is an alkyl group having 1 to 3 carbon atoms. The number of carbon atoms in $R^{30}$ is preferably 1 to 4, and more preferably 1 to 3. The number of carbon atoms in $R^{32}$ is preferably 1 to 5. h1 is 1 to 10, preferably 1 to 8, and more preferably 1 to 6. h2 is 1 or more, preferably 2 or more, and it may be 3.

Examples of the organosilicon compound (A) may include a compound represented by the following formula (a4) .

[Formula 16]

$$R^{40}-O-(R^{41}O)_{k1}-R^{42}-O-R^{43}-Si[R^{44}Si(OR^{45})_{k2}(H)_{3-k2}]_3 \quad \cdots (a4)$$

In the above formula (a4), $R^{40}$ is a perfluoroalkyl group having 2 to 5 carbon atoms; $R^{41}$ is a perfluoroalkylene group having 2 to 5 carbon atoms; $R^{42}$ is a fluoroalkylene group formed by replacing some of the hydrogen atoms of an alkylene group having 2 to 5 carbon atoms with fluorine; $R^{43}$ and $R^{44}$ are each independently an alkylene group having 2 to 5 carbon atoms; and $R^{45}$ is a methyl group or an ethyl group. k1 is an integer of 1 to 5. k2 is an integer of 1 to 3, preferably 2 or more, and it may be 3.

The number average molecular weight of the organosilicon compound (A) is preferably 2,000 or more, more preferably 4,000 or more, still more preferably 5,000 or more, further preferably 6,000 or more, and particularly preferably 7,000 or more, and it is also preferably 40,000 or less, more preferably 20,000 or less, and still more preferably 15,000 or less.

As the organosilicon compound (A), only one type may be used, or two or more types may be used.

Note that the composition for water repellent layer formation is a mixed composition of the organosilicon compound (A), and is obtained by mixing the organosilicon compound (A). Also, in the case where a component other than the organosilicon compound (A) is mixed, the composition for water repellent layer formation is obtained by mixing the organosilicon compound (A) and the other component. The composition for water repellent layer formation also includes one in which the reaction has progressed after mixing, for example, during storage. Examples of the reaction that has progressed include a case in which the composition for water repellent layer formation contains a compound in which a hydrolyzable group bonded to a silicon atom of the above organosilicon compound (A) (this may be bonded via a linking group) has become a -SiOH group (Si and OH may be bonded via a linking group) due to hydrolysis. Other examples thereof include a case in which the composition for water repellent layer formation contains a condensation product of the organosilicon compound (A), and examples of the condensation product include a condensation product formed by dehydration condensation of a -SiOH group that the organosilicon compound (A) has or a -SiOH group (Si and OH may be bonded via a linking group) of the organosilicon compound (A) generated by hydrolysis with a -SiOH group (Si and OH may be bonded via a linking group) derived from the organosilicon compound (A), or with a - SiOH group derived from another compound.

In the case where the water repellent layer (r) is a layer formed from the composition for water repellent layer formation, the water repellent layer (r) has a structure derived from the above organosilicon compound (A). As mentioned above, in the preferred aspect, the above organosilicon compound (A) has a hydrolyzable group or a hydroxy group bonded to a silicon atom (this may be bonded via a linking group), and -SiOH groups that the organosilicon compound (A) has or -SiOH groups (Si and OH may be bonded via a linking group) of the organosilicon compound (A) generated by hydrolysis undergo dehydration condensation with -SiOH groups (Si and OH may be bonded via a linking group) derived from the organosilicon compound (A), -SiOH groups derived from another compound, or active hydrogen (hydroxy groups or others) on the surface where the water repellent layer (r) is to be formed in the laminated body, and thus it is usually preferable for the water repellent layer (r) to have a condensed structure derived from the organosilicon compound (A).

4-2. Organosilicon compound (B)

In the composition for water repellent layer formation, an organosilicon compound (B) represented by the following formula (b1) may be further mixed in. In the case where the organosilicon compound (B) is mixed in the composition for water repellent layer formation, the composition for water repellent layer formation is obtained by mixing the organosilicon compound (A) and the organosilicon compound (B). The organosilicon compound (B) has the action of further improving the slideability of water droplets and others by being present between the organosilicon compounds (A) in the cured film. The organosilicon compound (B) has a hydrolyzable group or a hydroxy group represented by $A^2$, as will be described below. Examples of the hydrolyzable group include an alkoxy group, a halogen atom, a cyano group, an acetoxy group, and an isocyanate group.

[Formula 17]

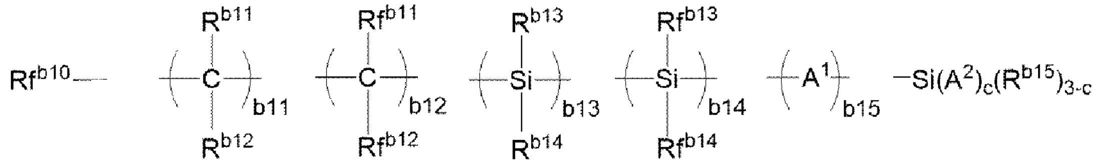

・・・(b1)

In the above formula (b1),

$Rf^{b10}$ is an alkyl group having 1 to 20 carbon atoms in which one or more hydrogen atoms are replaced by fluorine atoms, or a fluorine atom;
$R^{b11}$, $R^{b12}$, $R^{b13}$, and $R^{b14}$ are each independently a hydrogen atom or an alkyl group having 1 to 4 carbon atoms, and when there is a plurality of $R^{b11}$, the plurality of $R^{b11}$ is optionally different from each other, when there is a plurality of $R^{b12}$, the plurality of $R^{b12}$ is optionally different from each other, when there is a plurality of $R^{b13}$, the plurality of $R^{b13}$ is optionally different from each other, and when there is a plurality of $R^{b14}$, the plurality of $R^{b14}$ is optionally different from each other;
$Rf^{b11}$, $Rf^{b12}$, $Rf^{b13}$, and $Rf^{b14}$ are each independently an alkyl group having 1 to 20 carbon atoms in which one or more hydrogen atoms are replaced by fluorine atoms, or a fluorine atom, and when there is a plurality of $Rf^{b11}$, the plurality of $Rf^{b11}$ is optionally different from each other, when there is a plurality of $Rf^{b12}$, the plurality of $Rf^{b12}$ is optionally different from each other, when there is a plurality of $Rf^{b13}$, the plurality of $Rf^{b13}$ is optionally different from each other, and when there is a plurality of $Rf^{b14}$, the plurality of $Rf^{b14}$ is optionally different from each other;
$R^{b15}$ is an alkyl group having 1 to 20 carbon atoms, and when there is a plurality of $R^{b15}$, the plurality of $R^{b15}$ is optionally different from each other;
$A^1$ is -O-, -C(=O)-O-, -O-C(=O)-, -NR-, -NRC(=O)-, or -C(=O)NR-, where R is a hydrogen atom, an alkyl group having 1 to 4 carbon atoms, or a fluorine-containing alkyl group having 1 to 4 carbon atoms, and when there is a plurality of $A^1$, the plurality of $A^1$ is optionally different from each other;
$A^2$ is a hydrolyzable group or a hydroxy group, and when there is a plurality of $A^2$, the plurality of $A^2$ is optionally different from each other;
b11, b12, b13, b14, and b15 are each independently an integer of 0 to 100;
c is an integer of 1 to 3; and
as for $Rf^{b10}$-, $-Si(A^2)_c(R^{b15})_{3-c}$, b11 $-\{C(R^{b11})(R^{b12})\}$-units ($U_{b1}$), b12 $-\{C(Rf^{b11})(Rf^{b12})\}$- units ($U_{b2}$), b13 $-\{Si(R^{b13})(R^{b14})\}$- units ($U_{b3}$), b14 $-\{Si(Rf^{b13})(Rf^{b14})\}$- units ($U_{b4}$), and b15 $-A^1$- units ($U_{b5}$), each unit ($U_{b1}$) to unit ($U_{b5}$) is arranged and bonded in any order as long as $Rf^{b10}$- is one end of the compound represented by formula (b1), $-Si(A^2)_c(R^{b15})_{3-c}$ is the other end, a fluoropolyether structure is not formed, and -O- is not linked to -O- or -F.

$Rf^{b10}$ is each independently preferably a fluorine atom or a perfluoroalkyl group having 1 to 10 carbon atoms (more preferably 1 to 5 carbon atoms).
$R^{b11}$, $R^{b12}$, $R^{b13}$, and $R^{b14}$ are each preferably a hydrogen atom.
$R^{b15}$ is preferably an alkyl group having 1 to 5 carbon atoms.
$A^1$ is preferably -O-, -C(=O)-O-, or -O-C(=O)-.
$A^2$ is preferably an alkoxy group having 1 to 4 carbon atoms, or a halogen atom, and more preferably a methoxy group, an ethoxy group, or a chlorine atom.
b11 is preferably 1 to 30, more preferably 1 to 25, still more preferably 1 to 10, particularly preferably 1 to 5, and most preferably 1 to 2.
b12 is preferably 0 to 15, and more preferably 0 to 10.
b13 is preferably 0 to 5, and more preferably 0 to 2.
b14 is preferably 0 to 4, and more preferably 0 to 2.
b15 is preferably 0 to 4, and more preferably 0 to 2.
c is preferably 2 to 3, and more preferably 3.
The total value of b11, b12, b13, b14, and b15 is preferably 2 or more, more preferably 3 or more, and still more preferably 5 or more, and it is also preferably 80 or less, more preferably 50 or less, and still more preferably 20 or less.
In particular, it is preferable that $Rf^{b10}$ be a fluorine atom or a perfluoroalkyl group having 1 to 5 carbon atoms, $R^{b11}$ and $R^{b12}$ be both hydrogen atoms, and $A^2$ be a methoxy group or an ethoxy group, and that b11 be 1 to 5, b12 be 0 to 5, b13, b14, and b15 be all 0, and c be 3.
Note that, when FAS13E used as the organosilicon compound (B) in Examples, which will be described later,

is represented by the above formula (b1), $R^{b11}$ and $R^{b12}$ are both hydrogen atoms, b11 is 2, b13, b14, and b15 are all 0, c is 3, $A^2$ is an ethoxy group, and $Rf^{b10}$-$\{C(Rf^{b11})(Rf^{b12})\}_{b12}$- is an end and defined to be $C_6F_{13}$-.

Specifically, examples of the compound represented by the above formula (b1) include $C_jF_{2j+1}$-Si-$(OCH_3)_3$ and $C_jF_{2j+1}$-Si-$(OC_2H_5)_3$ (j is an integer of 1 to 12), and among the above, in particular, $C_4F_9$-Si-$(OC_2H_5)_3$, $C_6F_{13}$-Si-$(OC_2H_5)_3$, $C_7F_{15}$-Si- $(OC_2H_5)_3$, and $C_8F_{17}$-Si-$(OC_2H_5)_3$ are preferred. Other examples thereof include $CF_3CH_2O(CH_2)_kSiCl_3$, $CF_3CH_2O(CH_2)_kSi(OCH_3)_3$, $CF_3CH_2O(CH_2)_kSi(OC_2H_5)_3$, $CF_3(CH_2)_2Si(CH_3)_2(CH_2)_kSiCl_3$, $CF_3(CH_2)_2Si(CH_3)_2(CH_2)_kSi(OCH_3)_3$, $CF_3(CH_2)_2Si(CH_3)_2(CH_2)_kSi(OC_2H_5)_3$, $CF_3(CH_2)_6Si(CH_3)_2(CH_2)_kSiCl_3$, $CF_3(CH_2)_6Si(CH_3)_2(CH_2)_kSi(OCH_3)_3$, $CF_3(CH_2)_6Si(CH_3)_2(CH_2)_kSi(OC_2H_5)_3$, $CF_3COO(CH_2)_kSiCl_3$, $CF_3COO(CH_2)_kSi(OCH_3)_3$, and $CF_3COO(CH_2)_kSi(OC_2H_5)_3$ (k is all 5 to 20, preferably 8 to 15). Examples thereof may also include $CF_3(CF_2)_m$-$(CH_2)_nSiCl_3$, $CF_3(CF_2)_m$-$(CH_2)_nSi(OCH_3)_3$, and $CF_3(CF_2)_m$-$(CH_2)_nSi(OC_2H_5)_3$ (m is all 0 to 10, preferably 0 to 7, and n is all 1 to 5, preferably 2 to 4). Examples thereof may also include $CF_3(CF_2)_p$-$(CH_2)_q$-Si-$(CH_2CH=CH_2)_3$ (p is all 2 to 10, preferably 2 to 8, and q is all 1 to 5, preferably 2 to 4). Further examples thereof include $CF_3(CF_2)_p$-$(CH_2)_qSiCH_3Cl_2$, $CF_3(CF_2)_p$-$(CH_2)_qSiCH_3(OCH_3)_2$, and $CF_3(CF_2)_p$-$(CH_2)_qSiCH_3(OC_2H_5)_2$ (p is all 2 to 10, preferably 3 to 7, and q is all 1 to 5, preferably 2 to 4).

Among the compound represented by the above formula (b1), a compound represented by the following formula (b2) is preferred.

[Formula 18]

$$R^{60}-R^{61}-Si(OR^{62})_3 \quad \cdots \quad (b2)$$

In the above formula (b2), $R^{60}$ is a perfluoroalkyl group having 1 to 8 carbon atoms, $R^{61}$ is an alkylene group having 1 to 5 carbon atoms, and $R^{62}$ is an alkyl group having 1 to 3 carbon atoms.

As mentioned above, the composition for water repellent layer formation also contains one in which the reaction has progressed after mixing the organosilicon compound (A) and the organosilicon compound (B), which is used if necessary, and examples of the reaction that has progressed include a case in which the composition for water repellent layer formation contains a compound in which a hydrolyzable group bonded to a silicon atom of the above organosilicon compound (B) has become a -SiOH group due to hydrolysis. Other examples thereof include a case in which the mixed composition contains a condensation product of the organosilicon compound (B), and examples of the condensation product include a condensation product formed by dehydration condensation of a -SiOH group that the organosilicon compound (B) has or a -SiOH group of the organosilicon compound (B) generated by hydrolysis with a -SiOH group derived from the organosilicon compound (B), or with a -SiOH group derived from another compound.

In the case where the organosilicon compound (B) is mixed in the composition for water repellent layer formation, the water repellent layer (r) has a structure derived from the organosilicon compound (B). The organosilicon compound (B) represented by the above formula (b1) has a hydrolyzable group or a hydroxy group represented by $A^2$, and -SiOH groups that the organosilicon compound (B) has or -SiOH groups of the organosilicon compound (B) generated by hydrolysis undergo dehydration condensation with -SiOH groups derived from the organosilicon compound (B), -SiOH groups derived from another compound, or active hydrogen (hydroxy groups or others) on the surface where the water repellent layer (r) is to be formed in the laminated body, and thus it is preferable for the water repellent layer (r) to have a condensed structure derived from the organosilicon compound (B).

4-3. Solvent 4

In the composition for water repellent layer formation, a solvent 4 is usually mixed in. It is preferable to use a fluorinated solvent as the solvent 4, and for example, a fluorinated ether solvent, a fluorinated amine solvent, a fluorinated hydrocarbon solvent, and other solvents can be used, and in particular, a solvent with a boiling point of 100°C or higher is preferred. As the fluorinated ether solvent, preferred is a hydrofluoroether such as a fluoroalkyl (in particular, a perfluoroalkyl group having 2 to 6 carbon atoms)-alkyl (in particular, a methyl group or an ethyl group) ether, and examples thereof include ethyl nonafluorobutyl ether or ethyl nonafluoroisobutyl ether. Examples of the ethyl nonafluorobutyl ether or ethyl nonafluoroisobutyl ether include Novec (R) 7200 (manufactured by 3M Company, molecular weight about 264). As the fluorinated amine solvent, preferred is an amine formed by replacing at least one hydrogen atom of ammonia by a fluoroalkyl group, and preferred is a tertiary amine formed by replacing all hydrogen atoms of ammonia by fluoroalkyl groups (in particular, perfluoroalkyl groups). Specifically, examples thereof include tris(heptafluoropropyl)amine, and Fluorinert (R) FC-3283 (manufactured by 3M Company, molecular weight about 521) corresponds to this. Examples of the fluorinated hydrocarbon solvent include a fluorinated aliphatic hydrocarbon solvent such as 1,1,1,3,3-pentafluorobutane and perfluorohexane, and a fluorinated aromatic hydrocarbon solvent such as 1,3-bis(trifluoromethylbenzene). Examples of the 1,1,1,3,3-pentafluorobutane include Solve 55 (Solvex Inc.).

As the fluorinated solvent, in addition to the above, a hydrochlorofluorocarbon such as Asahiklin (R) AK225 (manufactured by AGC Inc.), a hydrofluorocarbon such as Asahiklin (R) AC2000 (manufactured by AGC Inc.), and others can be used.

As the solvent 4, it is preferable to use at least a fluorinated amine solvent. In addition, as the solvent 4, it is also preferable to use two or more fluorinated solvents, and it is preferable to use a fluorinated amine solvent and a fluorinated hydrocarbon solvent (in particular, a fluorinated aliphatic hydrocarbon solvent).

When the entire composition for water repellent layer formation is set to 100% by mass, the amount of the organosilicon compound (A) is, for example, 0.01% by mass or more, preferably 0.05% by mass or more, and it is also preferably 0.5% by mass or less, and more preferably 0.3% by mass or less.

When the entire composition for water repellent layer formation is set to 100% by mass, the amount of the organosilicon compound (B) is, for example, 0.01% by mass or more, preferably 0.03% by mass or more, and it is also preferably 0.3% by mass or less, and more preferably 0.2% by mass or less.

The mass ratio of the organosilicon compound (B) to the organosilicon compound (A) is preferably 0.2 or more, and more preferably 0.4 or more, and it is also preferably 3.0 or less, and more preferably 1.5 or less.

The total content of the organosilicon compound (A), the organosilicon compound (B), and the solvent 4 is, for example, 90% by mass or more, preferably 95% by mass or more, more preferably 99% by mass or more, and it may be 100% by mass in 100% by mass of the composition for water repellent layer formation.

Also, in the composition for water repellent layer formation, a variety of additives may be mixed in to the extent that the effects of the present invention are not inhibited, such as a silanol condensation catalyst, an antioxidant, a rust inhibitor, an ultraviolet absorber, a light stabilizer, a fungicide, an antibacterial agent, an antiviral agent, an anti-organism adhesion agent, a deodorant, a pigment, a flame retardant, and an antistatic agent. The amount of the additives is preferably 5% by mass or less, and more preferably 1% by mass or less, in 100% by mass of the composition for water repellent layer formation.

The thickness of the water repellent layer (r) is, for example, about 1 to 1000 nm.

5. Characteristics of laminated body

The water contact angle (initial contact angle) on the water repellent layer (r) surface of the laminated body of the present invention is, for example, 105° or more, preferably 110° or more, and it is also 125° or less, for example.

The water sliding angle (initial sliding angle) on the water repellent layer (r) surface of the laminated body of the present invention is, for example, 30° or less, preferably 28° or less, and it is also 10° or more, for example.

The water contact angle (initial wear resistance) on the water repellent layer (r) surface of the laminated body of the present invention after carrying out a wear resistance test in which the water repellent layer (r) surface is rubbed back and forth 3000 times with a load of 1000 g on a circular area with a diameter of 6 mm is, for example, 105° or more, preferably 110° or more, and it is also 125° or less, for example. The wear resistance test is a test in which the surface on the water repellent layer (r) side of the laminated body of the present invention is rubbed back and forth 3000 times with a load of 1000 g on a circular area with a diameter of 6 mm, and it is preferable to rub with an elastic material (preferably an eraser) when rubbing. For example, it is preferable to use an eraser, set the stroke distance of the wear resistance test to 40 mm and the rubbing speed to 40 back and forth/minute, and measure the contact angle at the approximate center of the stroke area. When applying a load, it is only necessary to apply a pressure equivalent to applying a load of 1000 g per circular area with a diameter of 6 mm.

When the laminated body of the present invention is fabricated using the composition for intermediate layer formation after an accelerated test of stirring for 2 hours in an atmosphere with a temperature of 22°C and a humidity of 55%, the water contact angle (wear resistance after the accelerated test) on the water repellent layer (r) surface of the laminated body after carrying out a wear resistance test in which the water repellent layer (r) surface is rubbed back and forth 1500 times with a load of 1000 g on a circular area with a diameter of 6 mm is, for example, 90° or more, preferably 100° or more, and more preferably 105° or more, and it is also 120° or less, for example. The wear resistance test is the same as the above-mentioned wear resistance test when measuring the initial wear resistance, except that the number of rubbing is 1500 back and forth.

Note that the specific method for evaluating each characteristic will be described in detail in the Examples section.

6. Method for producing laminated body

Next, the method for producing the laminated body of the present invention will be described.

The method for producing the laminated body of the present invention includes (i) a step of forming the intermediate layer (c) on the substrate (s), and (ii) a step of forming the water repellent layer (r).

In step (i), the composition for intermediate layer formation is applied to the substrate (s) or to the layer (X) provided on the substrate (s). Examples of the method for applying the composition for intermediate layer formation

include the dip coating method, the roll coating method, the bar coating method, the spin coating method, the spray coating method, the die coating method, and the gravure coating method, and in particular, the bar coating method, the spin coating method, the die coating method, and the gravure coating method are preferred.

Before applying the composition for intermediate layer formation, it is preferable to perform easy adhesion treatment on the substrate (s) or the layer (X) provided on the substrate (s). Examples of the easy adhesion treatment include hydrophilization treatment such as corona treatment, plasma treatment, and ultraviolet treatment. By carrying out the easy adhesion treatment such as plasma treatment, functional groups can be formed on the surface of the substrate (s) or the layer (X), such as OH groups (especially when the material of the substrate (s) or the layer (X) is an epoxy resin) or COOH groups (especially when the material of the substrate (s) or the layer (X) is an acrylic resin), and especially in the case where such functional groups are formed on the surface on the side where the intermediate layer (c) is to be formed, the close adhesion between the intermediate layer (c) and the substrate (s) or between the intermediate layer (c) and the layer (X) is further improved. In particular, it is preferable to carry out the easy adhesion treatment on the substrate (s) or on the layer (X) formed from the group (X1).

In the case where the layer (X) is formed from at least one selected from the group (X1), the layer (X) can be formed by, for example, applying a composition containing a reactive material that forms a crosslinked structure upon irradiation with active energy rays or thermal energy onto the substrate (s) and then curing it. Also, in the case where the layer (X) is formed from at least one selected from the group (X2), the layer (X) can be formed by, for example, the vapor deposition method.

After applying the composition for intermediate layer formation, it can be cured at normal temperature or by heating to form the intermediate layer (c). The curing conditions are not particularly limited, and it is only necessary to allow the composition to stand still at normal temperature and in the air for 10 seconds or longer, for example. In the present invention, normal temperature means 5 to 60°C, and the intermediate layer (c) can be formed by allowing the composition to stand still preferably in the temperature range of 15 to 40°C. Thereafter, it may be further heated (baked) at a temperature of 50 to 300°C, preferably 100 to 200°C, for about 10 seconds to 60 minutes.

After applying the composition for intermediate layer formation to form the intermediate layer (c), the composition for water repellent layer formation can be applied and cured at normal temperature or by heating to form the water repellent layer (r).

The composition for water repellent layer formation can be applied onto the intermediate layer (c) and dried to form the water repellent layer (r). Examples of the method for applying the composition for water repellent layer formation include the dip coating method, the roll coating method, the bar coating method, the spin coating method, the spray coating method, the die coating method, and the gravure coating method.

The conditions after applying the composition for water repellent layer formation onto the intermediate layer (c) are not particularly limited, and the water repellent layer (r) can be formed by allowing the composition to stand still at normal temperature and in the air for 10 seconds or longer, for example. Thereafter, it may be further heated (baked) at a temperature of 50 to 300°C, preferably 100 to 200°C, for about 10 seconds to 60 minutes.

<Display device>

The laminated body of the present invention is suitably used for display devices, and in particular, it is suitably used for flexible display devices. The laminated body of the present invention can preferably be used as a front plate in a display device, and the front plate may be referred to as a window film.

It is preferable that the display device be composed of a laminated body for display devices including a window film (that is, the laminated body of the present invention) and an organic EL display panel, in which the laminated body for display devices is disposed on the visible side relative to the organic EL display panel. Also, it is preferable that the flexible display device be composed of a laminated body for flexible display devices including a window film having flexible characteristics and an organic EL display panel, in which the laminated body for flexible display devices is disposed on the visible side relative to the organic EL display panel, and is configured to be bendable. The laminated body for display devices (preferably the laminated body for flexible display devices) may further contain a polarization plate (preferably a circular polarization plate), a touch sensor, and other components to constitute a touch panel display, and the order in which they are laminated is arbitrary, but it is preferable that they be laminated from the visible side in the order of window film, polarization plate, and touch sensor, or in the order of window film, touch sensor, and polarization plate. When the polarization plate is present on the visible side relative to the touch sensor, the pattern of the touch sensor is less visible and the visibility of displayed images is improved, which is preferable. Each member can be laminated using an adhesive, a gluing agent, and other methods. The display device (preferably the flexible display device) can also be equipped with a light shielding pattern formed on at least one side of any layer of the window film, the polarization plate, and the touch sensor.

(Window film)

The window film is disposed on the visible side of the display device (preferably the flexible image display device) and plays the role of protecting the other components from external impacts or environmental changes in temperature, humidity, and other factors. As such a protective layer, glass may be used, and in the flexible image display device, the material of the window film used may be one having flexible characteristics, rather than rigid and firm material such as glass. Accordingly, when using the laminated body of the present invention as the window film in the flexible display device, it is preferable that the substrate (s) be composed of a flexible transparent substrate, and a hard coat layer may be laminated on at least one side of the substrate (s).

The transparent substrate has a transmittance of visible light of, for example, 70% or more, preferably 80% or more. As the transparent substrate, any material can be used as long as it is a transparent polymer film. Specifically, it may be a film formed of the following polymers: polyolefins such as polyethylene, polypropylene, polymethylpentene, and cycloolefin derivatives having monomer units including norbornene or cycloolefins; (modified) celluloses such as diacetyl cellulose, triacetyl cellulose, and propionyl cellulose; acrylics such as methyl methacrylate (co)polymers; polystyrenes such as styrene (co)polymers; acrylonitrile-butadienestyrene copolymers; acrylonitrile-styrene copolymers; ethylene-vinyl acetate copolymers; polyvinyl chlorides; polyvinylidene chlorides; polyesters such as polyethylene terephthalate, polybutylene terephthalate, polyethylene naphthalate, polycarbonate, and polyarylate; polyamides such as nylon; polyimides; polyamideimides; polyetherimides; polyethersulfones; polysulfones; polyvinyl alcohols; polyvinyl acetals; polyurethanes; and epoxy resins, and an unstretched, uniaxially or biaxially stretched film can be used. These polymers can each be used alone, or two or more types can be used in mixture. Preferably, among the aforementioned transparent substrates, the polyamide film, polyamideimide film or polyimide film, polyester film, olefin film, acrylic film, and cellulose film are preferred because of their excellent transparency and heat resistance. It is also preferable to disperse inorganic particles such as silica, organic particles, rubber particles, and others in the polymer film. Furthermore, it may contain a compounding agent such as a colorant like pigment or dye, a fluorescent brightening agent, a dispersing agent, a plasticizer, a thermal stabilizer, a light stabilizer, an infrared absorber, an ultraviolet absorber, an antistatic agent, an antioxidant, a lubricant, or a solvent. The thickness of the transparent substrate is 5 $\mu$m or more and 200 $\mu$m or less, preferably 20 $\mu$m or more and 100 $\mu$m or less. Especially in the case where it is used in the flexible image display device, the thickness of the transparent substrate is preferably 5 $\mu$m or more and 60 $\mu$m or less.

The hard coat layer in the case where the laminated body of the present invention is used as the window film is also the same as the hard coat layer (he) described above. As mentioned above, it is preferable that the hard coat layer (hc) be formed from an active energy ray curable resin and a thermosetting resin, and such resins can be formed by curing a hard coat composition containing a reactive material that forms a crosslinked structure upon irradiation with active energy rays or thermal energy. The hard coat composition contains a polymerized product of at least one of a radical polymerizable compound and a cationic polymerizable compound.

The radical polymerizable compound is a compound having a radical polymerizable group. The radical polymerizable group that the radical polymerizable compound has may be any functional group that can cause a radical polymerization reaction, and examples thereof include a group containing a carbon-carbon unsaturated double bond. Specific examples thereof include a vinyl group and a (meth)acryloyl group. Note that, in the case where the radical polymerizable compound has two or more radical polymerizable groups, these radical polymerizable groups may be the same as or different from each other. It is preferable that the number of radical polymerizable groups that the radical polymerizable compound has in one molecule be two or more from the point of improving the hardness of the hard coat layer. As the radical polymerizable compound, a compound having a (meth)acryloyl group is particularly preferred from the point of high reactivity, and a compound referred to as a multifunctional acrylate monomer having 2 to 6 (meth)acryloyl groups in one molecule, or an oligomer with a molecular weight of hundreds to thousands having several (meth)acryloyl groups in the molecule, referred to as epoxy (meth)acrylate, urethane (meth)acrylate, or polyester (meth)acrylate, can be preferably used. It is preferable to include one or more selected from epoxy (meth)acrylate, urethane (meth)acrylate, and polyester (meth)acrylate.

The cationic polymerizable compound is a compound having a cationic polymerizable group such as an epoxy group, an oxetanyl group, and a vinyl ether group. The number of cationic polymerizable groups that the cationic polymerizable compound has in one molecule is preferably two or more, and still more preferably three or more, from the point of improving the hardness of the hard coat layer. Also, as the cationic polymerizable compound, a compound having at least one of epoxy group and oxetanyl group as the cationic polymerizable group is particularly preferred. A cyclic ether group, such as an epoxy group or an oxetanyl group, is preferred from the point that shrinkage associated with the polymerization reaction is small. In addition, a compound having an epoxy group among cyclic ether groups has the advantages that compounds with a wide variety of structures are readily available, the durability of the obtained hard coat layer is not adversely affected, and compatibility with the radical polymerizable compound is easily controlled. Also, an oxetanyl group among cyclic ether groups has the advantages that its degree of polymerization tends to be higher compared to an epoxy group, it is less toxic, it accelerates the network formation speed obtained from the cationic

polymerizable compound in the obtained hard coat layer, and it forms independent networks without leaving unreacted monomers in the film even in the area mixed with the radical polymerizable compound, for example.

Examples of the cationic polymerizable compound having an epoxy group include an alicyclic epoxy resin obtained by epoxidizing a polyglycidyl ether of a polyhydric alcohol having an alicyclic ring or a cyclohexene ring- or cyclopentene ring-containing compound with an appropriate oxidizing agent such as hydrogen peroxide or a peracid; an aliphatic epoxy resin such as a polyglycidyl ether of an aliphatic polyhydric alcohol or an alkylene oxide adduct thereof, a polyglycidyl ester of an aliphatic long-chain polybasic acid, and a homopolymer or copolymer of glycidyl (meth)acrylate; and a glycidyl ether epoxy resin derived from a glycidyl ether produced through the reaction of bisphenols such as bisphenol A, bisphenol F, and hydrogenated bisphenol A, or derivatives thereof such as alkylene oxide adducts and caprolactone adducts, with epichlorohydrin, and bisphenols, such as a novolac epoxy resin.

The hard coat composition can further contain a polymerization initiator. Examples of the polymerization initiator include a radical polymerization initiator, a cationic polymerization initiator, and a radical and cationic polymerization initiator, which can be selected and used as appropriate. These polymerization initiators are decomposed by at least one of irradiation with active energy rays and heating to generate radicals or cations to proceed radical polymerization and cationic polymerization.

The radical polymerization initiator may be anything as long as it is capable of releasing a substance that initiates radical polymerization by at least any of irradiation with active energy rays and heating. Examples of the thermal radical polymerization initiator include hydrogen peroxide, an organic peroxide such as perbenzoic acid, and an azo compound such as azobisbutyronitrile.

Examples of the active energy ray radical polymerization initiator include a Type 1 radical polymerization initiator, which generates radicals by molecular decomposition, and a Type 2 radical polymerization initiator, which coexists with a tertiary amine and generates radicals by a hydrogen abstraction reaction, each of which can also be used alone or in combination.

The cationic polymerization initiator may be anything as long as it is capable of releasing a substance that initiates cationic polymerization by at least any of irradiation with active energy rays and heating. As the cationic polymerization initiator, an aromatic iodonium salt, an aromatic sulfonium salt, a cyclopentadienyl iron(II) complex, and others can be used. They can initiate cationic polymerization by either irradiation with active energy rays or heating, or by both of them, depending on the difference in structure.

The polymerization initiator can be contained in an amount of 0.1 to 10% by weight relative to 100% by weight of the entire hard coat composition. In the case where the content of the polymerization initiator is less than 0.1% by weight, curing cannot progress sufficiently and it is difficult to realize the mechanical properties and close adhesion strength of the finally obtained coating film, and in the case where the content exceeds 10% by weight, poor adhesive force due to curing shrinkage, a breakage phenomenon, and a curling phenomenon may occur.

The hard coat composition can further contain one or more selected from the group consisting of a solvent and an additive. The solvent is one that can dissolve or disperse the polymerizable compound and the polymerization initiator, and any solvent can be used without restrictions as long as it is known as a solvent for hard coat compositions in the present technical field. The additive can further include an inorganic particle, a leveling agent, a stabilizer, a surfactant, an antistatic agent, a lubricant, an antifouling agent, and others.

(Circular polarization plate)

It is preferable for the display device (preferably the flexible display device) of the present invention to comprise a polarization plate, particularly a circular polarization plate, as described above. The circular polarization plate is a functional layer that has a function of transmitting only right- or left-handed circularly polarized light component by laminating a $\lambda/4$ phase difference plate on a linear polarization plate. For example, it is used in order to suppress the influence of reflected light and make images easier to see by converting outside light to right-handed circularly polarized light, blocking outside light that has been reflected by the organic EL panel and become left-handed circularly polarized light, and transmitting only the emissive component of the organic EL. In order to achieve the circular polarization function, the absorption axis of the linear polarization plate and the retardation axis of the $\lambda/4$ phase difference plate needs to be theoretically 45 degrees, but for practical purposes, $45 \pm 10$ degrees. The linear polarization plate and the $\lambda/4$ phase difference plate do not necessarily need to be laminated adjacent to each other, as long as the relationship between the absorption axis and the retardation axis satisfies the aforementioned range. Although it is preferable to achieve perfect circular polarization at all wavelengths, this is not always necessary for practical purposes, and therefore the circular polarization plate in the present invention encompasses an elliptical polarization plate as well. It is also preferable to improve visibility in the state of wearing polarization sunglasses by further laminating a $\lambda/4$ phase difference film on the visible side of the linear polarization plate to make the emitted light circularly polarized light.

The linear polarization plate is a functional layer that allows light oscillating in the direction of the transmission axis to pass through, but has a function to block polarized light of an oscillating component perpendicular to it. The linear

polarization plate may have a configuration comprising a linear polarizer alone or a linear polarizer and a protective film pasted onto at least one side thereof. The thickness of the linear polarization plate may be 200 μm or less, and is preferably 0.5 μm or more and 100 μm or less. When the thickness of the linear polarization plate is in the aforementioned range, the flexibility of the linear polarization plate tends to be difficult to decrease.

The linear polarizer may be a film-type polarizer produced by dyeing and stretching a polyvinyl alcohol (hereinafter, this may be abbreviated as PVA) film. A dichroic pigment such as iodine is adsorbed on the PVA film oriented by stretching, or the film is stretched with the dichroic pigment adsorbed on the PVA, resulting in orientation of the dichroic pigment and polarization performance. The production of the film-type polarizer may have other steps such as swelling, crosslinking with boric acid, washing with an aqueous solution, and drying. The stretching and dyeing steps may be performed on the PVA film alone or in the state where the film is laminated with another film (resin substrate for stretching), such as polyethylene terephthalate. The thickness of the PVA film used is preferably 3 to 100 μm, and the stretching ratio is preferably 2 to 10 times. As the method for fabricating a laminated body of a resin substrate for stretching and a PVA resin layer, a method is preferred in which an application liquid containing the PVA resin is applied to the surface of the resin substrate for stretching, and then dried.

In particular, when the production method includes a step of stretching the PVA resin layer and the resin substrate for stretching in the state of a laminated body and a step of dyeing it, it is possible to perform stretching without problems such as rupture due to stretching because the PVA resin layer is supported by the resin substrate for stretching, even if the PVA resin layer is thin.

The thickness of the polarizer is 20 μm or less, preferably 12 μm or less, more preferably 9 μm or less, still more preferably 1 to 8 μm, and particularly preferably 3 to 6 μm. Within the aforementioned range, it is a preferred aspect without inhibiting bending.

Furthermore, another example of the polarizer is a liquid crystal-applied polarizer that is formed by applying a liquid crystal polarization composition. The liquid crystal polarization composition can contain a liquid crystalline compound and a dichroic pigment compound. The liquid crystalline compound may be anything as long as it has the property of exhibiting a liquid crystalline state, and in particular, it is preferable that the compound have a highly oriented state, such as a smectic phase, thereby achieving high polarization performance. It is also preferable that the liquid crystalline compound have a polymerizable functional group.

The dichroic pigment compound is a pigment that is oriented together with the liquid crystalline compound to exhibit dichroism and may have a polymerizable functional group, or the dichroic pigment itself may have liquid crystallinity.

Any of the compounds contained in the liquid crystal polarization composition has a polymerizable functional group. The liquid crystal polarization composition can further contain an initiator, a solvent, a dispersing agent, a leveling agent, a stabilizer, a surfactant, a crosslinking agent, a silane coupling agent, and others.

The liquid crystal polarization layer is produced by applying the liquid crystal polarization composition onto an oriented film to form a liquid crystal polarization layer. The liquid crystal polarization layer can be formed to be thinner compared to the film-type polarizer, and its thickness is preferably 0.5 μm or more and 10 μm or less, and more preferably 1 μm or more and 5 μm or less.

The oriented film is produced by, for example, applying an oriented film-forming composition onto a substrate and imparting orientation by rubbing, polarized light irradiation, or other means. The oriented film-forming composition contains an orientation agent, and may further contain a solvent, a crosslinking agent, an initiator, a dispersing agent, a leveling agent, a silane coupling agent, and others. Examples of the orientation agent include a polyvinyl alcohol, a polyacrylate, a polyamic acid, and a polyimide. In the case of using an orientation agent that imparts orientation by polarized light irradiation, it is preferable to use an orientation agent that contains a cinnamate group. The weight average molecular weight of the polymer used as the orientation agent is, for example, about 10,000 to 1,000,000. The thickness of the oriented film is preferably 5 nm or more and 10,000 nm or less, and from the point that the orientation-regulating force is sufficiently expressed, more preferably 10 nm or more and 500 nm or less.

The liquid crystal polarization layer can be peeled off from the substrate, transferred, and laminated, or the substrate can be laminated as it is. It is also preferable that the substrate play the role as a protective film, a phase difference plate, and a transparent substrate for the window film.

The protective film may be anything as long as it is a transparent polymer film, and the same materials and additives used for the transparent substrate for the window film can be used. A cellulose film, an olefin film, an acrylic film, and a polyester film are preferred. It may also be a coating-type protective film obtained by applying and curing a cation curable composition such as epoxy resin or a radical curable composition such as acrylate. The protective film may contain, if necessary, a plasticizer, an ultraviolet absorber, an infrared absorber, a colorant like pigment or dye, a fluorescent brightening agent, a dispersing agent, a thermal stabilizer, a light stabilizer, an antistatic agent, an antioxidant, a lubricant, a solvent, and others. The thickness of the protective film is preferably 200 μm or less, and more preferably 1 μm or more and 100 μm or less. When the thickness of the protective film is in the aforementioned range, the flexibility of the film tends to be difficult to decrease. The protective film can also serve the role of the transparent substrate for the window film.

The λ/4 phase difference plate is a film that provides λ/4 phase difference in the direction perpendicular to the direction of incident light travel (in-plane direction of the film). The λ/4 phase difference plate may be a stretched phase difference plate produced by stretching a polymer film such as cellulose film, olefin film, and polycarbonate film. The λ/4 phase difference plate may contain, if necessary, a phase difference adjuster, a plasticizer, an ultraviolet absorber, an infrared absorber, a colorant like pigment or dye, a fluorescent brightening agent, a dispersing agent, a thermal stabilizer, a light stabilizer, an antistatic agent, an antioxidant, a lubricant, a solvent, and others.

The thickness of the stretched phase difference plate is preferably 200 μm or less, and more preferably 1 μm or more and 100 μm or less. When the thickness of the stretched phase difference plate is in the aforementioned range, the flexibility of the stretched phase difference plate tends to be difficult to decrease.

Furthermore, another example of the λ/4 phase difference plate is a liquid crystal-applied phase difference plate that is formed by applying a liquid crystal composition.

The liquid crystal composition includes a liquid crystalline compound that exhibits a liquid crystalline state such as nematic, cholesteric, and smectic. The liquid crystalline compound has a polymerizable functional group.

The liquid crystal composition can further contain an initiator, a solvent, a dispersing agent, a leveling agent, a stabilizer, a surfactant, a crosslinking agent, a silane coupling agent, and others.

In the same manner as for the liquid crystal polarization layer, the liquid crystal-applied phase difference plate can be produced by applying the liquid crystal composition onto the foundation and curing it to form the liquid crystal phase difference layer. The liquid crystal-applied phase difference plate can be formed to be thinner compared to the stretched phase difference plate. The thickness of the liquid crystal polarization layer is preferably 0.5 μm or more and 10 μm or less, and more preferably 1 μm or more and 5 μm or less.

The liquid crystal-applied phase difference plate can be peeled off from the substrate, transferred, and laminated, or the substrate can be laminated as it is. It is also preferable that the substrate play the role as a protective film, a phase difference plate, and a transparent substrate for the window film.

In general, many materials exhibit greater birefringence at shorter wavelengths and smaller birefringence at longer wavelengths. In this case, it is not possible to achieve λ/4 phase difference in the entire visible light region, and therefore, in order to achieve λ/4 with respect to around 560 nm where the visual sensitivity is high, the in-plane phase difference is designed to be preferably 100 nm or more and 180 nm or less, and more preferably 130 nm or more and 150 nm or less. An inverse dispersion λ/4 phase difference plate using a material having birefringence index wavelength dispersion characteristics opposite to the usual is preferred from the point that the visibility is good. As such materials, for example, those disclosed in Japanese Patent Laid-Open No. 2007-232873 and others can be used for the stretched phase difference plate, and those disclosed in Japanese Patent Laid-Open No. 2010-30979 and others can be used for the liquid crystal-applied phase difference plate.

In addition, as another method, a technique to obtain a broadband λ/4 phase difference plate by combining with a λ/2 phase difference plate is also known (for example, Japanese Patent Laid-Open No. 10-90521 and others). The λ/2 phase difference plate is also produced using the same materials and methods as for the λ/4 phase difference plate. The combination of stretched phase difference plate and liquid crystal-applied phase difference plate is arbitrary, but by using the liquid crystal-applied phase difference plate for both, the thickness can be made thinner.

The method of laminating a positive C-plate on the circular polarization plate is known in order to enhance visibility in the diagonal direction (for example, Japanese Patent Laid-Open No. 2014-224837 and others). The positive C-plate may be the liquid crystal-applied phase difference plate, or may be the stretched phase difference plate. The phase difference in the thickness direction of the phase difference plate is preferably - 200 nm or more and -20 nm or less, and more preferably - 140 nm or more and -40 nm or less.

(Touch sensor)

It is preferable for the display device (preferably the flexible display device) comprising the laminated body of the present invention to comprise a touch sensor, as described above. The touch sensor is used as an input means. Examples of the touch sensor include a variety of styles, such as resistive film system, surface acoustic wave system, infrared system, electromagnetic induction system, and electrostatic capacitance system, and preferably electrostatic capacitance system.

The electrostatic capacitive touch sensor is divided into an active area and an inactive area positioned on the outline of the active area. The active area is an area corresponding to the area on the display panel where the screen is displayed (display area) and where the touches by the user are sensed, while the inactive area is an area corresponding to the area on the display device where the screen is not displayed (non-display area). The touch sensor can include a substrate preferably having flexible characteristics, a sensing pattern formed in the active area of the substrate, and each sensing line formed in the inactive area of the substrate for connecting the sensing pattern to an external drive circuit via a pad section. As the substrate having flexible characteristics, the same materials as for the transparent substrate for the window film can be used. As the substrate of the touch sensor, one with a toughness of 2,000 MPa%

or more is preferred in terms of suppressing cracks in the touch sensor. More preferably, the toughness is 2,000 MPa% or more and 30,000 MPa% or less. Here, the toughness is defined as the lower area of the stress (MPa)-strain (%) curve (stress-strain curve) up to the fracture point, which is obtained through a tensile experiment on a polymeric material.

The sensing pattern can comprise a first pattern formed in a first direction and a second pattern formed in a second direction. The first pattern and the second pattern are disposed in directions different from each other. The first pattern and the second pattern are formed in the same layer, and each pattern must be electrically connected in order to sense the point to be touched. The first pattern is in the form of multiple unit patterns connected to each other via joints, while the second pattern is in the structure of multiple unit patterns separated from each other in the form of islands, and thus separate bridge electrodes are required in order to electrically connect the second pattern. Well known transparent electrodes can be applied to the electrodes for the connection of the second pattern. Examples of the material for the transparent electrodes include indium tin oxide (ITO), indium zinc oxide (IZO), zinc oxide (ZnO), indium zinc tin oxide (IZTO), indium gallium zinc oxide (IGZO), cadmium tin oxide (CTO), PEDOT (poly(3,4-ethylenedioxythiophene)), carbon nanotubes (CNT), graphene, and metal wires, and preferably ITO. They can be used alone, or two or more types can be used in mixture. The metal used for the metal wires is not particularly limited and examples thereof include silver, gold, aluminum, copper, iron, nickel, titanium, tellurium, and chromium. They can be used alone, or two or more types can be used in mixture.

The bridge electrodes can be formed on top of the sensing pattern via an insulating layer and on top of the insulating layer, or the bridge electrodes can be formed on the substrate and the insulating layer and the sensing pattern can be formed on top of it. The bridge electrodes can also be formed from the same material as the sensing pattern, and they can also be formed from molybdenum, silver, aluminum, copper, palladium, gold, platinum, zinc, tin, titanium, or an alloy of two or more of these metals.

Since the first pattern and the second pattern must be electrically isolated, an insulating layer is formed between the sensing pattern and the bridge electrodes. The insulating layer can be formed only between the first pattern joints and the bridge electrodes, or can also be formed as a layer covering the entire sensing pattern. In the case where the insulating layer is a layer covering the entire sensing pattern, the bridge electrodes can connect the second pattern through contact holes formed in the insulating layer.

The touch sensor can further include an optical adjustment layer between the substrate and the electrodes as a means to appropriately compensate for the difference in transmittance between the pattern area where the sensing pattern is formed and the non-pattern area where the sensing pattern is not formed, specifically, the difference in light transmittance induced by the difference in refractive index in these areas. The optical adjustment layer can contain an inorganic insulating substance or an organic insulating substance. The optical adjustment layer can be formed by coating the substrate with a photocurable composition containing a photocurable organic binder and a solvent. The photocurable composition can further contain inorganic particles. The refractive index of the optical adjustment layer can be increased by the inorganic particles.

The photocurable organic binder can contain a copolymer of each monomer, such as acrylate monomer, styrene monomer, and carboxylic acid monomer, to the extent that the effects of the present invention are not impaired. The photocurable organic binder may be, for example, a copolymer containing each repeating unit that differs from each other, such as epoxy group-containing repeating unit, acrylate repeating unit, and carboxylic acid repeating unit.

Examples of the inorganic particles include zirconia particles, titania particles, and alumina particles.

The photocurable composition can also further contain each additive such as a photopolymerization initiator, a polymerizable monomer, and a curing auxiliary agent.

(Adhesive layer)

Each layer (window film, circular polarization plate, touch sensor) that forms the laminated body for display devices (preferably flexible image display devices) and the film member (linear polarization plate, $\lambda/4$ phase difference plate, and others) that constitutes each layer can be joined with an adhesive. As the adhesive, an adhesive and others that are usually used can be used, such as an aqueous adhesive, an organic solvent adhesive, a solventless adhesive, a solid adhesive, a solvent volatilization adhesive, a moisture curable adhesive, a heat curable adhesive, an anaerobic curable adhesive, an active energy ray curable adhesive, a curing agent mixing type adhesive, a hot melt adhesive, a pressure sensitive adhesive (gluing agent), and a remoistening adhesive, and preferably, an aqueous solvent volatilization adhesive, an active energy ray curable adhesive, and a gluing agent can be used. The thickness of the adhesive layer can be adjusted as appropriate depending on the required adhesive force and other factors, and it is preferably 0.01 to 500 $\mu$m, and more preferably 0.1 to 300 $\mu$m. In the laminated body for display devices (preferably flexible image display devices), there is a plurality of adhesive layers, each of which may be the same or different in thickness and type.

In the aqueous solvent volatilization adhesive, a water soluble polymer such as polyvinyl alcohol polymer and starch, and a polymer in a water dispersion state such as ethylene-vinyl acetate emulsion and styrenebutadiene emulsion can be used as the main agent polymer. In addition to the main agent polymer and water, a crosslinking agent, a silane

compound, an ionic compound, a crosslinking catalyst, an antioxidant, a dye, a pigment, an inorganic filler, an organic solvent, and others may also be compounded. In the case of adhesion by the aqueous solvent volatilization adhesive, adhesiveness can be imparted by injecting the aqueous solvent volatilization adhesive between layers to be adhered, pasting the layers to be adhered together, and then drying them. In the case of using the aqueous solvent volatilization adhesive, the thickness of its adhesive layer is preferably 0.01 to 10 μm, and more preferably 0.1 to 1 μm. In the case where the aqueous solvent volatilization adhesive is used in a plurality of layers, the thickness and type of each layer may be the same or different.

The active energy ray curable adhesive can be formed by curing an active energy ray curable composition containing a reactive material that forms an adhesive layer upon irradiation with active energy rays. The active energy ray curable composition can contain a polymerized product of at least one of the same radical polymerizable compound and cationic polymerizable compound as those contained in the hard coat composition. As the radical polymerizable compound, the same compound can be used as the radical polymerizable compound in the hard coat composition.

As the cationic polymerizable compound, the same compound can be used as the cationic polymerizable compound in the hard coat composition.

As the cationic polymerizable compound used in the active energy ray curable composition, an epoxy compound is particularly preferred. In order to lower the viscosity as an adhesive composition, it is also preferable that a monofunctional compound be contained as a reactive diluent.

The active energy ray composition can contain a monofunctional compound to decrease the viscosity. Examples of the monofunctional compound include an acrylate monomer having one (meth)acryloyl group in one molecule and a compound having one epoxy group or oxetanyl group in one molecule, such as glycidyl (meth)acrylate.

The active energy ray composition can further contain a polymerization initiator. Examples of the polymerization initiator include a radical polymerization initiator, a cationic polymerization initiator, and a radical and cationic polymerization initiator, which are selected and used as appropriate. These polymerization initiators are decomposed by at least one of irradiation with active energy rays and heating to generate radicals or cations to proceed radical polymerization and cationic polymerization. An initiator can be used that can initiate at least any of radical polymerization or cationic polymerization by active energy ray irradiation in the description of the hard coat composition.

The active energy ray curable composition can further contain an ion scavenger, an antioxidant, a chain transfer agent, a close adhesion imparting agent, a thermoplastic resin, a filler, a flow viscosity modifier, a plasticizer, a defoamer solvent, an additive, and a solvent. In the case of adhering two layers to be adhered by the active energy ray curable adhesive, they can be adhered by applying the active energy ray curable composition to either one or both of the layers to be adhered, then pasting them together, and irradiating either or both of the layers to be adhered with active energy rays to cure the adhesive. In the case of using the active energy ray curable adhesive, the thickness of its adhesive layer is preferably 0.01 to 20 μm, and more preferably 0.1 to 10 μm. In the case where the active energy ray curable adhesive is used to form a plurality of adhesive layers, the thickness and type of each layer may be the same or different.

As the gluing agent, any of those classified as an acrylic gluing agent, a urethane gluing agent, a rubber gluing agent, a silicone gluing agent, and others can be used, depending on the main agent polymer. In addition to the main agent polymer, a crosslinking agent, a silane compound, an ionic compound, a crosslinking catalyst, an antioxidant, a tackifier, a plasticizer, a dye, a pigment, an inorganic filler, and others may also be compounded in the gluing agent. By dissolving or dispersing each component constituting the gluing agent in a solvent to obtain a gluing agent composition, applying the gluing agent composition onto a substrate, and then drying it, a gluing agent layer adhesive layer is formed. The gluing agent layer may be directly formed, or it may be separately formed on a substrate and then transferred. It is also preferable to use a release film in order to cover the gluing surface before adhesion. In the case of using the active energy ray curable adhesive, the thickness of its adhesive layer is preferably 0.1 to 500 μm, and more preferably 1 to 300 μm. In the case where the gluing agent is used in a plurality of layers, the thickness and type of each layer may be the same or different.

(Light shielding pattern)

The light shielding pattern can be applied as at least part of the bezel or housing of the display device (preferably the flexible image display device). The light shielding pattern hides the wiring disposed at the edge part of the display device (preferably the flexible image display device) and makes it difficult to see, thereby improving the visibility of the image. The light shielding pattern may be in the form of a single layer or multiple layers. The color of the light shielding pattern is not particularly restricted and may be black, white, metallic, or a variety of other colors. The light shielding pattern can be formed with a pigment to realize the color and a polymer such as acrylic resin, ester resin, epoxy resin, polyurethane, or silicone. They can be used alone, or two or more types can also be used in mixture. The light shielding pattern can be formed by a variety of methods, such as printing, lithography, and ink jet printing. The thickness of the light shielding pattern is preferably 1 to 100 μm, and more preferably 2 to 50 μm. In addition, it is also preferable to impart a shape such as slope in the thickness direction of the light shielding pattern.

[Examples]

Hereinafter, the present invention will be described more specifically with reference to Examples. The present invention is not restricted by the following Examples, but can of course be implemented with appropriate modifications to the extent that it may conform to the spirit of the foregoing and the following, all of which are included within the technical scope of the present invention.

[Preparation of composition for intermediate layer formation]

Example 1

A solution formed by mixing 0.25% by mass of a reaction product of N-2-(aminoethyl)-3-aminopropyltrimethoxysilane and chloropropyltrimethoxysilane (trade name: X-12-5263HP, manufactured by Shin-Etsu Chemical Co., Ltd.) disclosed in Japanese Patent Laid-Open No. 2012-197330, which is represented by the following formula, as the organosilicon compound (C), 99.50% by mass of butyl acetate as the solvent 1, and 0.25% by mass of acetone as the solvent 2 was stirred at room temperature to obtain a composition for intermediate layer formation 1.

[Formula 19]

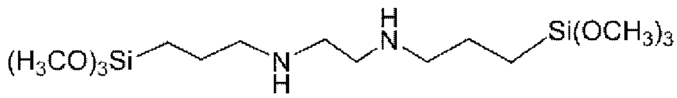

Example 2

In the same manner as in Example 1 except that 99.70% by mass of butyl acetate was used as the solvent 1 and 0.05% by mass of ethanol was used as the solvent 2, a composition for intermediate layer formation 2 was obtained.

Example 3

In the same manner as in Example 1 except that 2,2,3,3,4,4,5,5,6,6,7,7-dodecafluoro-1-heptanol was used as the solvent 2, a composition for intermediate layer formation 3 was obtained.

Example 4

In the same manner as in Example 1 except that 99.45% by mass of butyl acetate was used as the solvent 1 and 0.25% by mass of acetone and 0.05% by mass of ethanol were used as the solvent 2, a composition for intermediate layer formation 4 was obtained.

Example 5

In the same manner as in Example 1 except that 97.25% by mass of butyl acetate was used as the solvent 1 and 2.50% by mass of acetone was used as the solvent 2, a composition for intermediate layer formation 5 was obtained.

Example 6

In the same manner as in Example 1 except that 99.73% by mass of butyl acetate was used as the solvent 1 and 0.025% by mass of acetone was used as the solvent 2, a composition for intermediate layer formation 6 was obtained.

Example 7

In the same manner as in Example 1 except that 28.50% by mass of butyl acetate was used as the solvent 1 and 71.25% by mass of acetone was used as the solvent 2, a composition for intermediate layer formation 7 was obtained.

Example 8

In the same manner as in Example 1 except that 99.25% by mass of butyl acetate was used as the solvent 1

and 0.50% by mass of diacetone alcohol was used as the solvent 2, a composition for intermediate layer formation 8 was obtained.

Example 9

In the same manner as in Example 1 except that 3-(trimethoxysilyl)propan-1-amine (KBM-903 manufactured by Shin-Etsu Chemical Co., Ltd.), which is represented by the following formula, was used as the organosilicon compound (C), a composition for intermediate layer formation 9 was obtained.

[Formula 20]

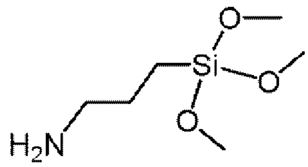

Comparative Example 1

A solution formed by mixing 0.25% by mass of a reaction product of N-2-(aminoethyl)-3-aminopropyltrimethoxysilane and chloropropyltrimethoxysilane (trade name: X-12-5263HP, manufactured by Shin-Etsu Chemical Co., Ltd.) disclosed in Japanese Patent Laid-Open No. 2012-197330 as the organosilicon compound (C) and 99.75% by mass of toluene as the solvent 1 was stirred at room temperature to obtain a composition for intermediate layer formation 10.

Table 1 below shows the Hansen solubility parameters of the solvents used in the compositions for intermediate layer formation, the ratio (δH/δD), and the Hansen solubility parameter distance Ra from X-12-5263HP, as calculated according to the above-mentioned expression (E.1) .

[Table 1]

| | | Hansen solubility parameters $(J/cm^3)^{0.5}$ | | | δH/δD | Solvent classification | Ra $(J/cm^3)^{0.5}$ |
|---|---|---|---|---|---|---|---|
| | | δD | δP | δH | | | |
| Solvent | Butyl acetate | 15.8 | 3.7 | 6.3 | 0.399 | Solvent 1 | - |
| | Toluene | 18.0 | 1.4 | 2.0 | 0.111 | Solvent 1 | - |
| | Acetone | 15.5 | 10.4 | 7 | 0.452 | Solvent 2 | 3.121 |
| | Ethanol | 15.8 | 8.8 | 19.4 | 1.228 | Solvent 2 | 10.355 |
| | 2,2,3,3,4,4,5,5,6,6,7,7-Dodecafluoro-1-heptanol | 14.1 | 4.4 | 7.9 | 0.560 | Solvent 2 | 4.679 |
| | Diacetone alcohol | 15.8 | 8.2 | 10.8 | 0.684 | Solvent 2 | 1.881 |
| Organosilicon compound (C) | X-12-5263HP | 15.4 | 8.1 | 9.1 | | | |

As for the Hansen solubility parameters in Table 1, the values registered in the database of the HSPiP version 5.2.05 are shown for butyl acetate, toluene, acetone, ethanol, 2,2,3,3,4,4,5,5,6,6,7,7-dodecafluoro-1-heptanol, and diacetone alcohol, and the values calculated by the "Measurement of Hansen solubility parameters by solubility sphere method" described below are shown for X-12-5263HP.

Measurement of Hansen solubility parameters by solubility sphere method

In a transparent container, 1 mL of a solvent with known solubility parameters as shown in Table 2 (source: Polymer Handbook, 4th Edition) and 1 mL of X-12-5263HP were added to prepare a mixed solution. After shaking the obtained mixture, the appearance of the mixed solution was visually observed, and from the obtained observation results, the solubility of X-12-5263HP in the solvent was evaluated based on the following evaluation criteria. Note that, in the

case where the evaluation criterion was 1 or 2, the solvent was judged to have dissolved the measurement sample, and in the case where the evaluation criterion was 0, the solvent was judged not to have dissolved the measurement sample. The evaluation results are shown in Table 2.

(Evaluation criteria)

2: The appearance of the mixed solution is translucent.
1: The appearance of the mixed solution is colorless and transparent.
0: The appearance of the mixed solution is cloudy.

[Table 2]

| Solvent type | Hansen solubility parameters $(J/cm^3)^{0.5}$ | | | Evaluation |
|---|---|---|---|---|
| | δD | δP | δH | |
| Hexadecane | **16.3** | **0.0** | **0.0** | **2** |
| **HFE7000** | **13.0** | **4.2** | **1.0** | **2** |
| Aniline | **20.1** | **5.8** | **11.2** | **2** |
| Propylene carbonate | **20.0** | **18.0** | **4.1** | **2** |
| Ethylene glycol | **17.0** | **11.0** | **26.0** | **2** |
| Diethylene glycol | **16.6** | **12.0** | **19.0** | **2** |
| **HFC-365mfc** | **16.4** | **0.0** | **0.0** | **1** |
| Isoamyl acetate | **15.3** | **3.1** | **1.0** | **1** |
| Hexane | **14.9** | **0.0** | **0.0** | **1** |
| Isopropyl alcohol | **15.8** | **6.1** | **16.4** | **1** |
| Acetophenone | **18.8** | **9.0** | **4.0** | **1** |
| Dimethyl sulfoxide | **18.4** | **16.4** | **10.2** | **1** |
| p-Xylene | **17.8** | **1.0** | **3.1** | **1** |
| Ethanol | **15.8** | **8.8** | **19.4** | **1** |
| Diacetone alcohol | **15.8** | **8.2** | **10.8** | **1** |
| 1-Ethoxy-1,1,2,2,3,3,4,4,4-nonafluorobutane | **13.1** | **2.8** | **2.1** | **0** |

From the obtained evaluation results of solubility, a solubility sphere was made using the above-mentioned solubility sphere method. The center coordinates of the obtained solubility sphere were used as the Hansen solubility parameters of X-12-5263HP.

[Preparation of composition for water repellent layer formation]

A compound (a10) satisfying the above formula (a3) as the organosilicon compound (A), FAS13E ($C_6F_{13}$-$C_2H_4$-$Si(OC_2H_5)_3$, manufactured by Tokyo Chemical Industry Co., Ltd.) as the organosilicon compound (B), and FC-3283 ($C_9F_{21}N$, Fluorinert, manufactured by 3M Company) as the solvent 4 were mixed, and stirred at room temperature for a certain period of time to obtain a composition for water repellent layer formation. The proportion of the organosilicon compound (A) in the composition for water repellent layer formation was 0.085% by mass, and the proportion of the organosilicon compound (B) was 0.05% by mass. Note that the compound (a10) used as the organosilicon compound (A) is a compound that satisfies not only the requirements for the above-mentioned compounds (a11) and (a21), but also the requirements for formula (a3) including the preferred aspects.

[Fabrication of laminated body]

Example 10

Using OPTICOAT MS-A100 (bar coater) manufactured by Mikasa Corporation and #2 bar, the composition for intermediate layer formation 1 obtained as described above was applied onto a hard coat layer in a polyethylene terephthalate substrate that has the hard coat layer, the applied surface of which had been subjected to activation treatment using an atmospheric pressure plasma device (manufactured by Fuji Machine Mfg. Co., Ltd.), under conditions of 0.5 ml and 100 mm/sec, and dried at 100°C for 30 seconds to form an intermediate layer. Thereafter, the composition for water repellent layer formation was applied onto the intermediate layer under the same conditions as described above, and dried at 100°C for 30 seconds to form a water repellent layer.

Example 11

In the same manner as in Example 10 except that the composition for intermediate layer formation 1 that had been subjected to the accelerated test described below was used instead of the composition for intermediate layer formation 1, a laminated body was obtained.

Accelerated test 40 mL of the prepared composition for intermediate layer formation was separated into a polypropylene disposable container, covered with a heat resistant gas barrier film made of polyvinylidene chloride, and then stirred at 400 rpm for 2 hours under air atmosphere with a temperature of 22°C and a humidity of 55%.

Example 12

In the same manner as in Example 10 except that the composition for intermediate layer formation 2 was used instead of the composition for intermediate layer formation 1, a laminated body was obtained.

Example 13

In the same manner as in Example 10 except that the composition for intermediate layer formation 2 that had been subjected to the above accelerated test was used instead of the composition for intermediate layer formation 1, a laminated body was obtained.

Example 14

In the same manner as in Example 10 except that the composition for intermediate layer formation 3 was used instead of the composition for intermediate layer formation 1, a laminated body was obtained.

Example 15

In the same manner as in Example 10 except that the composition for intermediate layer formation 3 that had been subjected to the above accelerated test was used instead of the composition for intermediate layer formation 1, a laminated body was obtained.

Example 16

In the same manner as in Example 10 except that the composition for intermediate layer formation 4 was used instead of the composition for intermediate layer formation 1, a laminated body was obtained.

Example 17

In the same manner as in Example 10 except that the composition for intermediate layer formation 4 that had been subjected to the above accelerated test was used instead of the composition for intermediate layer formation 1, a laminated body was obtained.

Example 18

In the same manner as in Example 10 except that the composition for intermediate layer formation 5 was used instead of the composition for intermediate layer formation 1, a laminated body was obtained.

Example 19

In the same manner as in Example 10 except that the composition for intermediate layer formation 5 that had been subjected to the above accelerated test was used instead of the composition for intermediate layer formation 1, a laminated body was obtained.

Example 20

In the same manner as in Example 10 except that the composition for intermediate layer formation 6 was used instead of the composition for intermediate layer formation 1, a laminated body was obtained.

Example 21

In the same manner as in Example 10 except that the composition for intermediate layer formation 6 that had been subjected to the above accelerated test was used instead of the composition for intermediate layer formation 1, a laminated body was obtained.

Example 22

In the same manner as in Example 10 except that the composition for intermediate layer formation 7 was used instead of the composition for intermediate layer formation 1, a laminated body was obtained.

Example 23

In the same manner as in Example 10 except that the composition for intermediate layer formation 7 that had been subjected to the above accelerated test was used instead of the composition for intermediate layer formation 1, a laminated body was obtained.

Example 24

In the same manner as in Example 10 except that the composition for intermediate layer formation 8 was used instead of the composition for intermediate layer formation 1, a laminated body was obtained.

Example 25

In the same manner as in Example 10 except that the composition for intermediate layer formation 8 that had been subjected to the above accelerated test was used instead of the composition for intermediate layer formation 1, a laminated body was obtained.

Example 26

In the same manner as in Example 10 except that the composition for intermediate layer formation 9 was used instead of the composition for intermediate layer formation 1, a laminated body was obtained.

Example 27

In the same manner as in Example 10 except that the composition for intermediate layer formation 9 that had been subjected to the above accelerated test was used instead of the composition for intermediate layer formation 1, a laminated body was obtained.

Comparative Example 2

In the same manner as in Example 10 except that the composition for intermediate layer formation 10 was used instead of the composition for intermediate layer formation 1, a laminated body was obtained.

Comparative Example 3

In the same manner as in Example 10 except that the composition for intermediate layer formation 10 that had

been subjected to the above accelerated test was used instead of the composition for intermediate layer formation 1, a laminated body was obtained.

The compositions and laminated bodies obtained in the above Examples and Comparative Examples were evaluated by the following methods. The results are shown in Table 3.

Evaluation of storage stability

25 mL of the compositions for intermediate layer formation 1 to 10 were each separated into a 50 mL screw tube, opened under the air, and then stored with the lid closed. The air atmosphere was at a temperature of 22°C and a humidity of 55%. The number of days from the time the lid was closed until the composition became clouded was measured. It can be said that the longer the number of days until cloudiness, the better the storage stability of the composition.

Measurement of contact angel (initial contact angle)

On the surface of the laminated bodies obtained in Examples 10, 12, 14, 16, 18, 20, 22, 24, and 26, as well as Comparative Example 2, a water droplet of 3 μL was dropped on the water repellent layer side, and the contact angle of water was measured by the droplet method (analysis method: θ/2 method) using a contact angle measuring device (manufactured by Kyowa Interface Science, Inc., DM700).

Measurement of sliding angle (initial sliding angle)

On the surface of the laminated bodies obtained in Examples 10, 12, 14, 16, 18, 20, 22, 24, and 26, as well as Comparative Example 2, a water droplet of 6.0 μL was dropped on the water repellent layer side, and the dynamic water repellent characteristics (sliding angle) of the water repellent layer (r) surface of the laminated bodies were measured using the contact angle measuring device (manufactured by Kyowa Interface Science, Inc., DM700) by the sliding method (water droplet volume: 6.0 μL, tilting method: continuous tilting, sliding detection: after sliding, sliding judgment distance: 0.25 mm).

Measurement of wear resistance (initial wear resistance)

For the laminated bodies obtained in Examples 10, 12, 14, 16, 18, 20, 22, 24, and 26, as well as Comparative Example 2, a wear resistance test was carried out using a scratching device equipped with an eraser manufactured by Minoan, Inc., applying a load of 1000 g with the eraser in a state of being in contact with the water repellent layer (r) surface of the laminated bodies (contact surface: circle with a diameter of 6 mm), and moving the eraser back and forth on the laminated bodies at a speed of 40 r/min (40 back and forth per one minute) and with a stroke of 40 mm. The contact angle of water was measured after moving the eraser back and forth 3000 times on the laminated bodies.

Measurement of wear resistance after accelerated test

For the laminated bodies obtained in Examples 11, 13, 15, 17, 19, 21, 23, 25, and 27, as well as Comparative Example 3, a wear resistance test was carried out using a scratching device equipped with an eraser manufactured by Minoan, Inc., applying a load of 1000 g with the eraser in a state of being in contact with the water repellent layer (r) surface of the laminated bodies (contact surface: circle with a diameter of 6 mm), and moving the eraser back and forth on the laminated bodies at a speed of 40 r/min (40 back and forth per one minute) and with a stroke of 40 mm. The contact angle of water was measured after moving the eraser back and forth 1500 times on the laminated bodies.

Visual check of coating film surface after accelerated test

For the laminated bodies obtained in Examples 11, 13, 15, 17, 19, 21, 23, 25, and 27, as well as Comparative Example 3, the condition of the coating film surface was visually checked under indoor fluorescent light. Sensory evaluation was carried out by assigning ○ to a colorless and transparent surface and × to an uneven or foreign substance on the surface.

[Table 3]

| | | | Example 1 Examples 10 to 11 | Example 2 Examples 12 to 13 | Example 3 Examples 14 to 15 | Example 4 Examples 16 to 17 | Example 5 Examples 18 to 19 | Example 6 Examples 20 to 21 | Example 7 Examples 22 to 23 | Example 8 Examples 24 to 25 | Example 9 Examples 26 to 27 | Comparative Example 1 Comparative Examples 2 to 3 |
|---|---|---|---|---|---|---|---|---|---|---|---|---|
| Composition for intermediate layer formation | | | 1 | 2 | 3 | 4 | 5 | 6 | 7 | 8 | 9 | 10 |
| Compositional features | Organosilicon compound (C) | | X-12-5263HP | X-12-5263HP | X-12-5263HP | X-12-5263HP | X-12-5263HP | X-12-5263HP | X-12-5263HP | X-12-5263HP | KBM-903 | X-12-5263HP |
| | | | 0.25% | 0.25% | 0.25% | 0.25% | 0.25% | 0.25% | 0.25% | 0.25% | 0.25% | 0.25% |
| | Solvent 1 | | Butyl acetate | Butyl acetate | Butyl acetate | Butyl acetate | Butyl acetate | Butyl acetate | Butyl acetate | Butyl acetate | Butyl acetate | Toluene |
| | | | 99.50% | 99.70% | 99.50% | 99.45% | 97.25% | 99.73% | 28.50% | 99.25% | 99.50% | 99.75% |
| | Solvent 2 | | Acetone | Ethanol | 2,2,3,3,4,4,5,5,6,6,7,7-Dodecafluoro-1-heptanol | Acetone / Ethanol | Acetone | Acetone | Acetone | Diacetone alcohol | Acetone | - |
| | | | 0.25% | 0.05% | 0.25% | 0.25% / 0.05% | 2.50% | 0.025% | 71.25% | 0.50% | 0.25% | |
| Solvent 2/solvent 1 | | | 0.251% | 0.050% | 0.251% | 0.302% | 2.571% | 0.025% | 250.000% | 0.504% | 0.251% | - |
| Storage stability | | Days | 22 | 10 | 30 | 14 | >30 | 14 | >30 | >30 | 2 | <1 |
| Initial contact angle | | ° | 115.4 | 114.3 | 115.4 | 118.0 | 115.6 | 114.7 | 113.7 | 114.4 | 115.2 | 114.2 |
| Initial sliding angle | | ° | 26 | 25 | 27 | 28 | 27 | 17 | 21 | 27 | 21 | 25 |
| Initial wear resistance | | ° | 114.3 | 110.1 | 116.4 | 115.8 | 116.6 | 114.1 | 116.0 | 114.2 | 112.3 | 113.0 |
| Wear resistance after accelerated test | | ° | 111.4 | 112.0 | 108.6 | 112.9 | 113.9 | 105.0 | 112.3 | 113.6 | 110.8 | 103.6 |
| Coating film surface after accelerated test | | | ○ | ○ | ○ | ○ | ○ | ○ | ○ | ○ | ○ | × |

[Industrial Applicability]

The laminated body having a layer formed from the composition of the present invention can be suitably used for display devices such as touch panel displays, optical elements, semiconductor elements, construction materials, nanoimprint technology, solar cells, window glass of automobiles and buildings, metal products such as cookware, ceramic products such as tableware, automobile components made of plastics, and others, and is industrially useful. It is also preferably used for items of various members around kitchens, bathrooms, washing stands, mirrors, and toilets.

## Claims

1. A mixed composition comprising an organosilicon compound (C) having an amino group or an amine skeleton, a solvent 1, and a solvent 2,
wherein, when a ratio of a hydrogen bond term (δH) to a dispersion term (δD) in Hansen solubility parameters is defined as δH/δD, the ratio (δH/δD) for the solvent 1 is less than 0.410 and the ratio (δH/δD) for the solvent 2 is 0.410 or more.

2. The composition according to claim 1, wherein a mass ratio of the solvent 2 to the solvent 1 is 0.01% by mass or more and 250% by mass or less.

3. The composition according to claim 1 or 2, wherein the solvent 2 contains a non-fluorinated alcohol solvent 2-A, or an organic solvent 2-B having a Hansen solubility parameter distance Ra of 5 $(J/cm^3)^{0.5}$ or less from the organosilicon compound (C), as calculated according to expression (E.1):
[Expression 1]

$$Ra = \sqrt{4(\delta D1 - \delta D2)^2 + (\delta P1 - \delta P2)^2 + (\delta H1 - \delta H2)^2} \qquad (E.1)$$

wherein

δD1 is a dispersion term $(J/cm^3)^{0.5}$ in Hansen solubility parameters of the organosilicon compound (C);
δD2 is a dispersion term $(J/cm^3)^{0.5}$ in Hansen solubility parameters of the organic solvent 2-B;
δP1 is a polarity term $(J/cm^3)^{0.5}$ in Hansen solubility parameters of the organosilicon compound (C);
δP2 is a polarity term $(J/cm^3)^{0.5}$ in Hansen solubility parameters of the organic solvent 2-B;
δH1 is a hydrogen bond term $(J/cm^3)^{0.5}$ in Hansen solubility parameters of the organosilicon compound (C); and
δH2 is a hydrogen bond term $(J/cm^3)^{0.5}$ in Hansen solubility parameters of the organic solvent 2-B.

4. The composition according to claim 3, wherein the solvent 2 contains the non-fluorinated alcohol solvent 2-A and the organic solvent 2-B.

5. The composition according to any one of claims 1 to 4, wherein the solvent 1 is an ester solvent.

6. The composition according to any one of claims 1 to 5, wherein a hydrolyzable group or a hydroxy group is bonded to at least one silicon atom in the organosilicon compound (C).

7. The composition according to any one of claims 1 to 6, wherein the organosilicon compound (C) is a compound represented by any of the following formulas (c1) to (c3) :

[Formula 1]

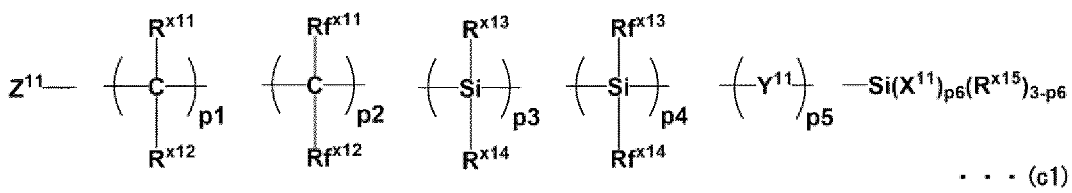

・・・(c1)

wherein

$R^{x11}$, $R^{x12}$, $R^{x13}$, and $R^{x14}$ are each independently a hydrogen atom or an alkyl group having 1 to 4 carbon atoms, and when there is a plurality of $R^{x11}$, the plurality of $R^{x11}$ is optionally different from each other, when there is a plurality of $R^{x12}$, the plurality of $R^{x12}$ is optionally different from each other, when there is a plurality of $R^{x13}$, the plurality of $R^{x13}$ is optionally different from each other, and when there is a plurality of $R^{x14}$, the plurality of $R^{x14}$ is optionally different from each other;

$Rf^{x11}$, $Rf^{x12}$, $Rf^{x13}$, and $Rf^{x14}$ are each independently an alkyl group having 1 to 20 carbon atoms in which one or more hydrogen atoms are replaced by fluorine atoms, or a fluorine atom, and when there is a plurality of $Rf^{x11}$, the plurality of $Rf^{x11}$ is optionally different from each other, when there is a plurality of $Rf^{x12}$, the plurality of $Rf^{x12}$ is optionally different from each other, when there is a plurality of $Rf^{x13}$, the plurality of $Rf^{x13}$ is optionally different from each other, and when there is a plurality of $Rf^{x14}$, the plurality of $Rf^{x14}$ is optionally different from each other;

$R^{x15}$ is an alkyl group having 1 to 20 carbon atoms, and when there is a plurality of $R^{x15}$, the plurality of $R^{x15}$ is optionally different from each other;

$X^{11}$ is a hydrolyzable group, and when there is a plurality of $X^{11}$, the plurality of $X^{11}$ is optionally different from each other;

$Y^{11}$ is -NH- or -S-, and when there is a plurality of $Y^{11}$, the plurality of $Y^{11}$ is optionally different from each other;

$Z^{11}$ is a vinyl group, an $\alpha$-methylvinyl group, a styryl group, a methacryloyl group, an acryloyl group, an amino group, an isocyanate group, an isocyanurate group, an epoxy group, a ureido group, or a mercapto group;

p1 is an integer of 1 to 20, p2, p3, and p4 are each independently an integer of 0 to 10, and p5 is an integer of 0 to 10;

p6 is an integer of 1 to 3;

when $Z^{11}$ is not an amino group, there is at least one $Y^{11}$ that is -NH-, and when $Y^{11}$ is all -S- or when p5 is 0, $Z^{11}$ is an amino group; and

as for $Z^{11}$-, $-Si(X^{11})_{p6}(R^{x15})_{3-p6}$, p1 $-\{C(R^{x11})(R^{x12})\}$-units ($U_{c11}$), p2 $-\{C(Rf^{x11})(Rf^{x12})\}$- units ($U_{c12}$), p3 $-\{Si(R^{x13})(R^{x14})\}$- units ($U_{c13}$), p4 $-\{Si(Rf^{x13})(Rf^{x14})\}$- units ($U_{c14}$), and p5 $-Y^{11}$- units ($U_{c15}$), each unit ($U_{c11}$) to unit ($U_{c15}$) is arranged and bonded in any order as long as $Z^{11}$-is one end of the compound represented by formula (c1), $-Si(X^{11})_{p6}(R^{x15})_{3-p6}$ is the other end, and -O- is not linked to -O-,

[Formula 2]

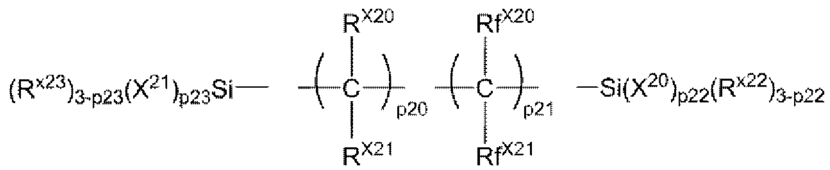

(c2)

wherein

$R^{x20}$ and $R^{x21}$ are each independently a hydrogen atom or an alkyl group having 1 to 4 carbon atoms, and when there is a plurality of $R^{x20}$, the plurality of $R^{x20}$ is optionally different from each other and when there is a plurality of $R^{x21}$, the plurality of $R^{x21}$ is optionally different from each other;

$Rf^{x20}$ and $Rf^{x21}$ are each independently an alkyl group having 1 to 20 carbon atoms in which one or more hydrogen atoms are replaced by fluorine atoms, or a fluorine atom, and when there is a plurality of $Rf^{x20}$, the plurality of $Rf^{x20}$ is optionally different from each other and when there is a plurality of $Rf^{x21}$, the plurality of $Rf^{x21}$ is optionally different from each other;

$R^{x22}$ and $R^{x23}$ are each independently an alkyl group having 1 to 20 carbon atoms, and when there is a plurality of $R^{x22}$ and $R^{x23}$, the plurality of $R^{x22}$ and $R^{x23}$ is optionally different from each other;

$X^{20}$ and $X^{21}$ are each independently a hydrolyzable group, and when there is a plurality of $X^{20}$ and $X^{21}$, the plurality of $X^{20}$ and $X^{21}$ is optionally different from each other;

p20 is each independently an integer of 1 to 30, p21 is each independently an integer of 0 to 30, and at least one of repeating units in parentheses subscripted with p20 or p21 is replaced by an amine skeleton $-NR^{100}$-, where $R^{100}$ in the amine skeleton is a hydrogen atom or an alkyl group;

p22 and p23 are each independently an integer of 1 to 3; and

as for p20 $-\{C(R^{x20})(R^{x21})\}$- units ($U_{c21}$) and p21 $-\{C(Rf^{x20})(Rf^{x21})\}$- units ($U_{c22}$), p20 units ($U_{c21}$) or p21 units ($U_{c22}$) are not necessarily consecutive, but each unit ($U_{c21}$) and unit ($U_{c22}$) is arranged and bonded in any order, and one end of the compound represented by formula (c2) is $-Si(X^{20})_{p22}(R^{x22})_{3-p22}$ and the other end is $-Si(X^{21})_{p23}(R^{x23})_{3-p23}$, and

[Formula 3]

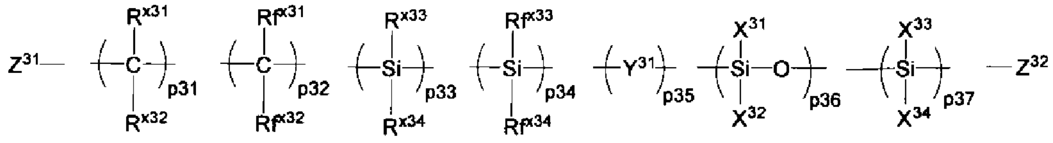

・・・(c3)

wherein

$Z^{31}$ and $Z^{32}$ are each independently a reactive functional group other than hydrolyzable and hydroxy groups;

$R^{x31}$, $R^{x32}$, $R^{x33}$, and $R^{x34}$ are each independently a hydrogen atom or an alkyl group having 1 to 4 carbon atoms, and when there is a plurality of $R^{x31}$, the plurality of $R^{x31}$ is optionally different from each other, when there is a plurality of $R^{x32}$, the plurality of $R^{x32}$ is optionally different from each other, when there is a plurality of $R^{x33}$, the plurality of $R^{x33}$ is optionally different from each other, and when there is a plurality of $R^{x34}$, the plurality of $R^{x34}$ is optionally different from each other;

$Rf^{x31}$, $Rf^{x32}$, $Rf^{x33}$, and $Rf^{x34}$ are each independently an alkyl group having 1 to 20 carbon atoms in which one or more hydrogen atoms are replaced by fluorine atoms, or a fluorine atom, and when there is a plurality of $Rf^{x31}$, the plurality of $Rf^{x31}$ is optionally different from each other, when there is a plurality of $Rf^{x32}$, the plurality of $Rf^{x32}$ is optionally different from each other, when there is a plurality of $Rf^{x33}$, the plurality of $Rf^{x33}$ is optionally different from each other, and when there is a plurality of $Rf^{x34}$, the plurality of $Rf^{x34}$ is optionally different from each other;

$Y^{31}$ is -NH-, $-N(CH_3)-$, or -O-, and when there is a plurality of $Y^{31}$, the plurality of $Y^{31}$ is optionally different from each other;

$X^{31}$, $X^{32}$, $X^{33}$, and $X^{34}$ are each independently $-OR^c$, where $R^c$ is a hydrogen atom, an alkyl group having 1 to 4 carbon atoms, or an amino-$C_{1-3}$ alkyl-di-$C_{1-3}$ alkoxysilyl group, and when there is a plurality of $X^{31}$, the plurality of $X^{31}$ is optionally different from each other, when there is a plurality of $X^{32}$, the plurality of $X^{32}$ is optionally different from each other, when there is a plurality of $X^{33}$, the plurality of $X^{33}$ is optionally different from each other, and when there is a plurality of $X^{34}$, the plurality of $X^{34}$ is optionally different from each other;

p31 is an integer of 0 to 20, p32, p33, and p34 are each independently an integer of 0 to 10, p35 is an integer of 0 to 5, p36 is an integer of 1 to 10, and p37 is 0 or 1; and

p31 $-\{C(R^{x31})(R^{x32})\}-$ units ($U_{c31}$), p32 $-\{C(Rf^{x31})(Rf^{x32})\}-$ units ($U_{c32}$), p33 $-\{Si(R^{x33})(R^{x34})\}-$ units ($U_{c33}$), p34 $-\{Si(Rf^{x33})(Rf^{x34})\}-$ units ($U_{c34}$), p35 $-Y^{31}-$ units ($U_{c35}$), p36 $-\{Si(X^{31})(X^{32})-O\}-$ units ($U_{c36}$), and p37 $-\{Si(X^{33})(X^{34})\}-$ units ($U_{c37}$) are each arranged and bonded in any order when a condition is satisfied that at least one of $Z^{31}$ and $Z^{32}$ is an amino group or at least one $Y^{31}$ is -NH- or $-N(CH_3)-$, and as long as one end of the compound represented by formula (c3) is $Z^{31}-$, the other end is $Z^{32}-$, and -O- is not linked to -O-.

**8.** The composition according to any one of claims 1 to 7, wherein a content of the organosilicon compound (C) is 0.005% by mass or more and 5% by mass or less.

**9.** A laminated body in which a substrate (s) and a water repellent layer (r) are laminated via an intermediate layer (c), wherein the intermediate layer (c) is a layer formed from the composition according to any one of claims 1 to 8.

**10.** The laminated body according to claim 9, wherein the substrate (s) is a substrate composed of an organic material.

**11.** A window film or touch panel display comprising the laminated body according to claim 9 or 10.

## INTERNATIONAL SEARCH REPORT

International application No. **PCT/JP2022/002095**

**A. CLASSIFICATION OF SUBJECT MATTER**

***C09K 3/00***(2006.01)i; ***C09K 3/18***(2006.01)i
FI: C09K3/00 R; C09K3/18 104

According to International Patent Classification (IPC) or to both national classification and IPC

**B. FIELDS SEARCHED**

Minimum documentation searched (classification system followed by classification symbols)

C09K3/00; C09K3/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2003-48815 A (KOSE CORP) 21 February 2003 (2003-02-21)<br>claims 1-4, paragraphs [0001], [0005]-[0013], examples 1-3, 5 | 1-2, 5-8<br>3-4, 9-11 |
| Y<br>A | JP 2006-111549 A (NIPPON NSC LTD) 27 April 2006 (2006-04-27)<br>claim 6, paragraphs [0045], [0119] | 1-2, 5-8<br>3-4, 9-11 |
| A | JP 2014-80473 A (ASAHI GLASS CO LTD) 08 May 2014 (2014-05-08)<br>claims 1-8 | 1-11 |
| A | JP 2016-500553 A (LG CHEM, LTD) 14 January 2016 (2016-01-14)<br>claims 1-14 | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 April 2022** | **19 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/002095**

| Patent document cited in search report | Publication date (day/month/year) | Patent family member(s) | Publication date (day/month/year) |
|---|---|---|---|
| JP 2003-48815 A | 21 February 2003 | (Family: none) | |
| JP 2006-111549 A | 27 April 2006 | (Family: none) | |
| JP 2014-80473 A | 08 May 2014 | (Family: none) | |
| JP 2016-500553 A | 14 January 2016 | US 2015/0294091 A1<br>claims 1-14<br>WO 2015/008976 A1<br>KR 10-2015-0009756 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014193988 A
- JP 2012197330 A
- JP 2007232873 A
- JP 2010030979 A
- JP 10090521 A
- JP 2014224837 A


### Non-patent literature cited in the description


- **CHARLES M. HANSEN.** Hansen Solubility Parameters: A Users Handbook. CRC Press, 2007
- Polymer Handbook